# EUROPEAN PATENT SPECIFICATION

(11) **EP 4 442 028 B1**
(45) Date of publication and mention of the grant of the patent: **29.10.2025**
(21) Application number: 22818924.7
(22) Date of filing: 28.11.2022
(51) Int. Cl.: H04W 24/10

(54) **MINIMIZATION OF DRIVE TEST CONFIGURATION IN USER EQUIPMENT**
MINIMIZATION OF DRIVE TEST KONFIGURATION IM BENUTZERENDGERÄT
CONFIGURATION DE MINIMIZATION OF DRIVE TEST DANS ÉQUIPEMENT UTILISATEUR

(30) Priority: 02.12.2021 US 202163285245 P
(43) Date of publication of application: 09.10.2024
(73) Proprietor: Telefonaktiebolaget LM Ericsson (publ), 164 83 Stockholm (SE)
(72) Inventor: BIN REDHWAN, Sakib, 586 49 Linköping (SE); RAMACHANDRA, Pradeepa, 589 29 Linköping (SE); PARICHEHREHTEROUJENI, Ali, 583 34 Linköping (SE)
(74) Representative: Ericsson
(86) International application number: PCT/SE2022/051110
(87) International publication number: WO 2023/101591

(56) References cited:
- WO-A1-2021/024049
- US-A1- 2021 344 430
- ERICSSON: "[105bis#19][NR/RDCU] Dual Connectivity Handling in MDT - email discussion summary", vol. RAN WG2, no. Reno, Nevada, USA; 20190513 - 20190517, 13 May 2019 (2019-05-13), XP051730342, Retrieved from the Internet <URL:http://www.3gpp.org/ftp/Meetings%5F3GPP%5FSYNC/RAN2/Docs/R2%2D1906890%2Ezip> [retrieved on 20190513]
- LG ELECTRONICS: "Immediate MDT for DC", vol. RAN WG2, no. Renoina; 20190513 - 20190517, 13 May 2019 (2019-05-13), XP051731470, Retrieved from the Internet <URL:http://www.3gpp.org/ftp/Meetings%5F3GPP%5FSYNC/RAN2/Docs/R2%2D1908064%2Ezip> [retrieved on 20190513]
- CMCC: "Network aspects of MDT for NR", vol. RAN WG3, no. Athens, Greece; 20190225 - 20190301, 16 February 2019 (2019-02-16), XP051604506, Retrieved from the Internet <URL:http://www.3gpp.org/ftp/tsg%5Fran/WG3%5FIu/TSGR3%5F103/Docs/R3%2D190568%2Ezip> [retrieved on 20190216]

## Description

### Technical Field

This disclosure relates to techniques for Minimization of Drive Test configuration in user equipment.

### Background

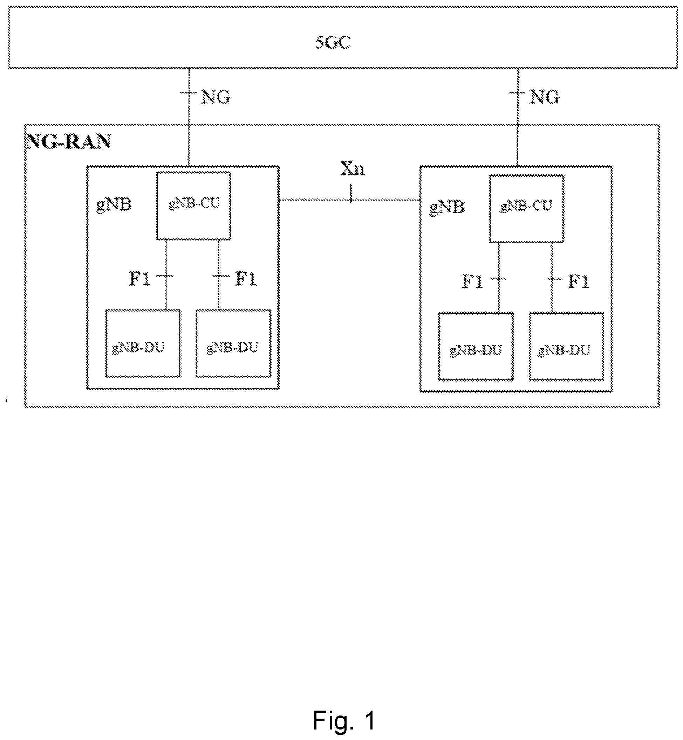

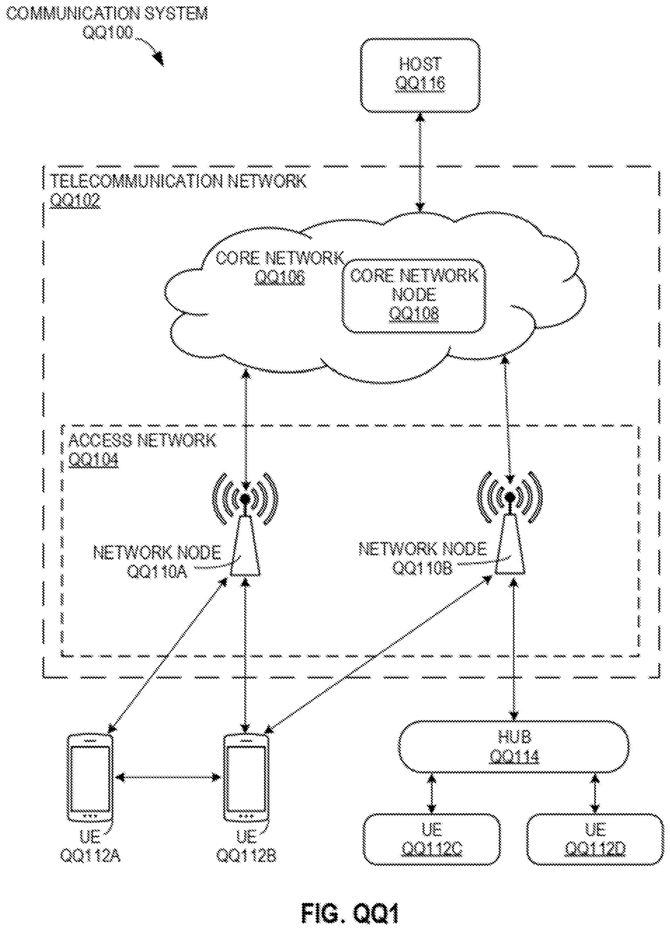

The Fifth Generation (5G) Radio Access Network (RAN) architecture, referred to as Next Generation Radio Access Network (NG-RAN), is depicted in **Fig. 1****.** The NG-RAN shown in Fig. 1 consists of a set of Next Generation network nodes (gNBs) connected to the 5G Core (5GC) through the NG interface. A gNB can support Frequency Division Duplexing (FDD) mode, Time division duplexing (TDD) mode or dual mode operation. gNBs can be interconnected through the Xn interface. A gNB may consist of a gNB centralised unit (gNB-CU) and gnB distributed units (gNB-DUs). A gNB-CU and a gNB-DU are connected via the F1 logical interface. One gNB-DU is typically connected to only one gNB-CU. For resiliency, however, a gNB-DU may be connected to multiple gNB-CUs by appropriate implementation. NG, Xn and F1 are logical interfaces.

The NG-RAN is layered into a Radio Network Layer (RNL) and a Transport Network Layer (TNL). The NG-RAN architecture, i.e., the NG-RAN logical nodes and interfaces between them, is defined as part of the RNL. For each NG-RAN interface (e.g. NG, Xn, F1) the related TNL protocol and the functionality are specified. The TNL provides services for user plane transport and signalling transport.

A gNB may also be connected to a Long Term Evolution (LTE) evolved Node B (eNB) via the X2 interface. Another architectural option is that an LTE eNB connected to the Evolved Packet Core (EPC) network may be connected over the X2 interface with a so-called NR-gNB. An NR-gNB is a gNB not connected directly to a Core Network (CN) and connected via X2 to an eNB for the sole purpose of performing dual connectivity.

The architecture in Fig. 1 can be expanded by splitting the gNB-CU into two entities. The first, referred to as gNB-CU-UP, serves the user plane (UP) and hosts the Packet Data Convergence Protocol (PDCP). The second, referred to as gNB-CU-CP, serves the control plane (CP) and hosts the PDCP and Radio Resource Control (RRC) protocol. A gNB-DU hosts the Radio Link Control (RLC), Medium Access Control (MAC) and physical layer (PHY) protocols.

Minimization of Drive Test (MDT) is a standardised mechanism for providing operators with network performance optimization tools. There are two MDT functionalities: immediate MDT and logged MDT. Immediate MDT relates to MDT functionality involving measurements performed by the UE in CONNECTED state and reporting of the measurements to RAN available at the time of reporting condition as well as measurements by the network for MDT purposes. Logged MDT relates to MDT functionality involving measurement logging by a UE for reporting at a later point in time. Further information can be found in Third Generation Partnership Project (3GPP) Technical Specification (TS) 37.320 version 16.6.0.

Immediate MDT is standardized so that the management systems can collect the key performance indicators (KPIs) associated with a UE in the connected mode. The following excerpts from TS 37.320 version 16.6.0 provide some information about the configuration and reporting of measurements in immediate MDT.

### 5.1.2.1 Measurement configuration

*For Immediate MDT, RAN measurements and UE measurements can be configured. The configuration for UE measurements is based on the existing RRC measurement procedures for configuration and reporting with some extensions for location information.*

*NOTE: No extensions related to time stamp are expected for Immediate MDT i.e. time stamp is expected to be provided by eNB*/*RNC*/*gNB.*

*If area scope is included in the MDT configuration provided to the RAN, the UE is configured with respective measurement when the UE is connected to* a *cell that is part of the configured area scope.*

### 5.1.2.2 Measurement reporting

*For Immediate MDT, the UE provides detailed location information (e.g. GNSS location information) if available. The UE also provides available neighbour cell measurement information that may be used to determine the UE location (RF fingerprint). ECGI, Cell-Id, or CellIdentity of the serving cell when the measurement was taken is always assumed known in E-UTRAN, UTRAN or NR respectively.*

*The location information which comes with UE radio measurements for MDT can be correlated with other MDT measurements, e.g. RAN measurements. For MDT measurements where UE location information is provided separately, it is assumed that the correlation of location information and MDT measurements should be done in the TCE based on time-stamps.*

### 5.2.1.1 Measurements and reporting triggers for Immediate MDT

*Measurements to be performed for Immediate MDT purposes involve reporting triggers and criteria utilized for RRM. An MDT specific UE-based measurement for UL PDCP delay is applied for QoS verification purpose. In addition, there are measurements performed in eNB.*

The same technical specification contains corresponding disclosures in respect of Next Generation Radio Access.

The following measurement is relevant for the disclosure (a detailed list can be found in TS 37.320 version 16.6.0): M6 Packet Delay measurement separately for DL and UL, per Data Radio Bearer (DRB) per UE. For M6 the measurement collection trigger can be the end of a measurement collection period.

Also relevant to the disclosure herein is MDT for Multi-RAT Dual Connectivity (MR-DC). The following excerpt from TS 37.320 version 16.6.0 provides information on Immediate MDT for MR-DC.

### 5.4.1.3 Immediate MDT for MR-DC

*In signalling based immediate MDT, AMF provides MDT configuration for both MN and SN towards MN including multi RAT SN configuration, specifically E-UTRA and NR MDT configuration. MN then forwards the NR MDT configuration towards SN (EN-DC scenario, SN is always NR).*

*In management-based immediate MDT, OAM provides the MDT configuration to both MN and SN independently. For both MN and SN, Management based MDT should not overwrite signalling based MDT. For immediate MDT configuration, MN and SN can independently configure and receive measurement from the UE.*

The RAN internal delay can be split into multiple components and they are captured in TS 38.314 version 16.4.0. The following excerpts from TS 38.314 version 16.4.0 provide some details of these components that make up RAN delay.

*The DL packet delay measurements, i.e. D1 (the DL delay in over-the-air interface* ), *D2 (the DL delay in gNB-DU), D3 (the DL delay on F1-U) and D4 (the DL delay in CU-UP), should be measured per DRB per UE.*

*The RAN part (including UE) of UL packet delay measurement comprises:*
- *D1 (UL PDCP packet average delay, as defined in clause 4.3.1.1).*
- *D2.1 (average over-the-air interface packet delay, as defined in 4.2.1.2.2).*
- *D2.2 (average RLC packet delay, as defined in 4.2.1.2.3).*
- *D2.3 (average delay UL on F1-U, it is measured using the same metric as the average delay DL on F1-U defined in TS 28.552 [4] clause 5.1.3.3.2).*
- *D2.4 (average PDCP re-ordering delay, as defined in 4.2.1.2.4).*

*The UL packet delay measurements, i.e. D1(UL PDCP packet average delay), D2.1(average over-the-air interface packet delay), D2.2(average RLC packet delay), D2.3(average delay UL on F1-U) and D2.4(average PDCP re-ordering delay), should be measured per DRB per UE. The unit of D1, D2.1, D2.2, D2.3 and D2.4 is 0.1ms.*

*For non CU-DU split case, RAN part of packet delay excludes the delay at FI-U interface, i.e. D2.3 and D3.*

*For the QoS monitoring in TS 23.501 [4], RAN informs the RAN part of UL packet delay measurement, or the RAN part of DL packet delay measurement, or both to the CN.*

Further formulae for calculating D1 (UL PDCP packet average delay) can be found in TS 38.314 version 16.4.0.

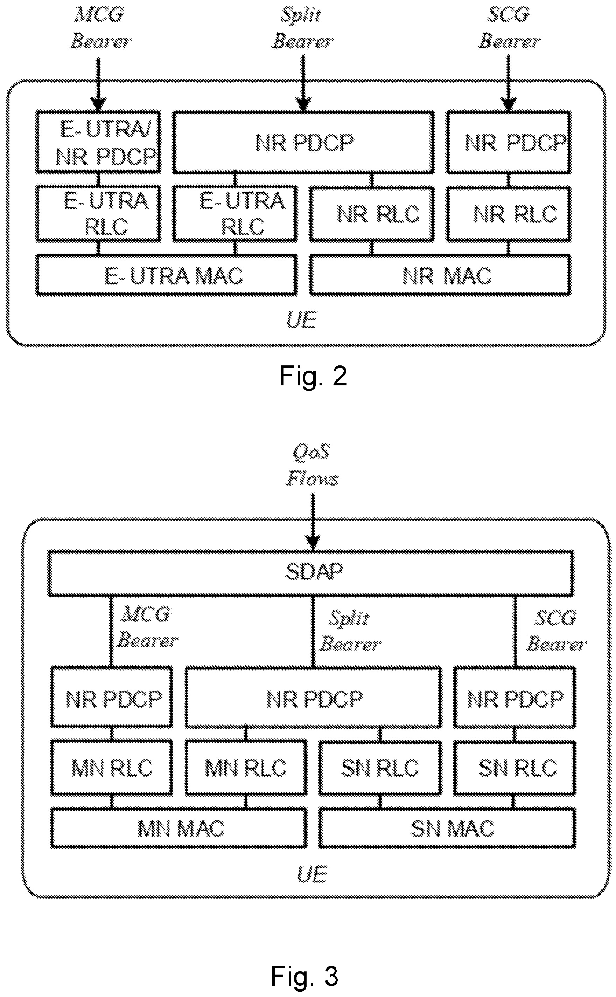

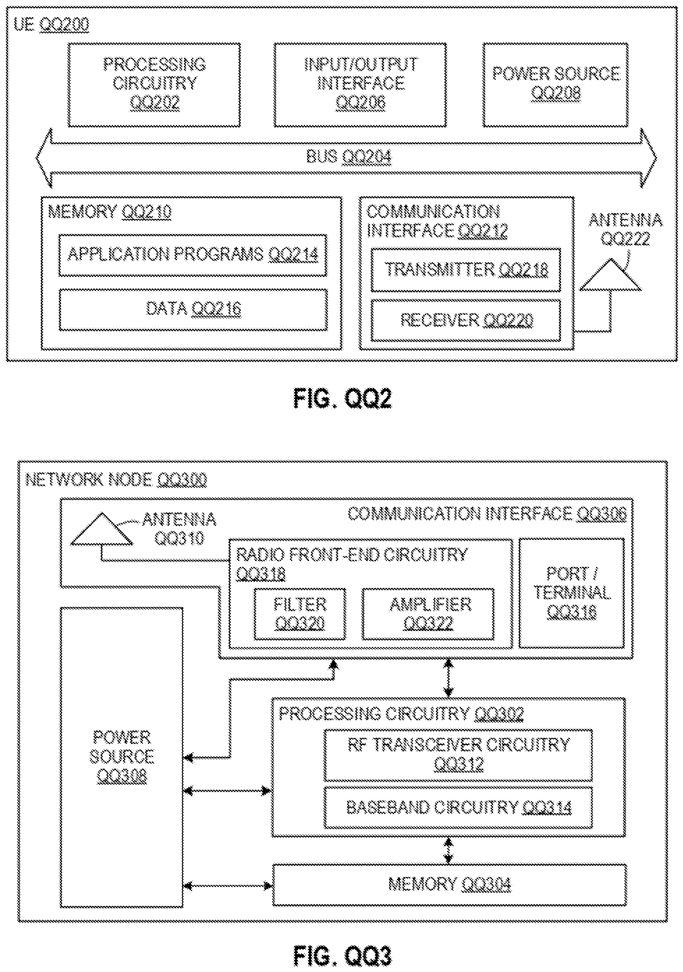

In MR-DC, from a UE perspective, three bearer types exist: Master Cell Group (MCG) bearer, Secondary Cell Group (SCG) bearer and split bearer. These three bearer types are depicted in Fig. 2 for MR-DC with EPC (EN-DC) and in Fig. 3 for MR-DC with 5GC (NGEN-DC, NE-DC and NR-DC).

In Evolved Universal Mobile Telecommunications System (UMTS) Terrestrial Radio Access (E-UTRA) connected to EPC, if the UE supports EN-DC, regardless of whether EN-DC is configured or not, the network can configure either E-UTRA PDCP or NR PDCP for Master Node (MN)-terminated MCG bearers while NR PDCP is always used for all other bearers. A change from E-UTRA to NR PDCP or vice-versa can be performed via a reconfiguration procedure (with or without handover), either using release and add of the DRBs or using the full configuration option.

In MR-DC with 5GC, NR PDCP is always used for all bearer types.

NGEN-DC is a Dual Connectivity configuration utilizing the 5GC, whereby the MN is a 4G NG-eNB and the secondary node (SN) is a 5G gNB. In NGEN-DC, E-UTRA RLC/MAC is used in the MN while NR RLC/MAC is used in the SN.

In NE-DC, NR RLC/MAC is used in the MN while E-UTRA RLC/MAC is used in the SN. In NR-DC, NR RLC/MAC is used in both MN and SN.

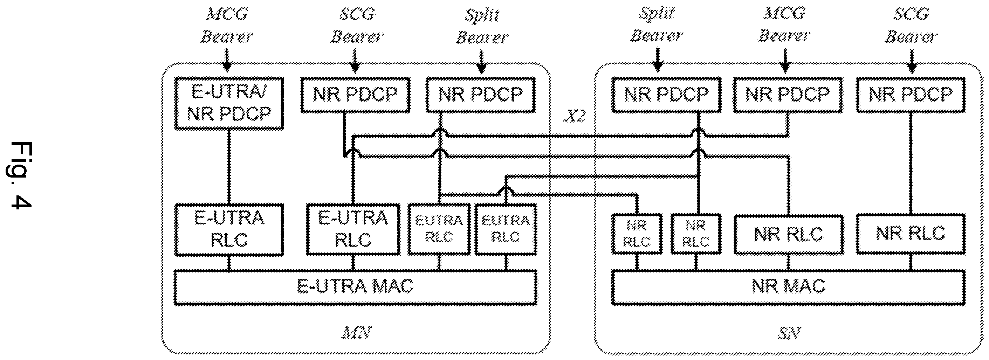

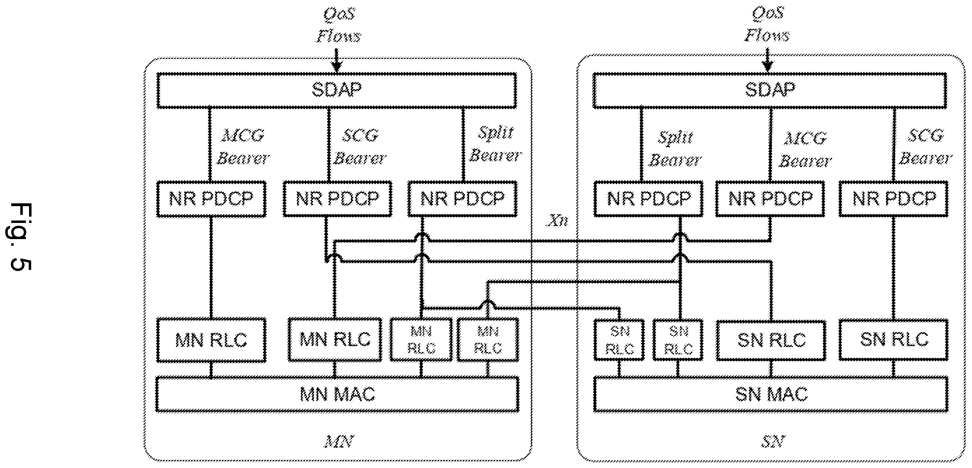

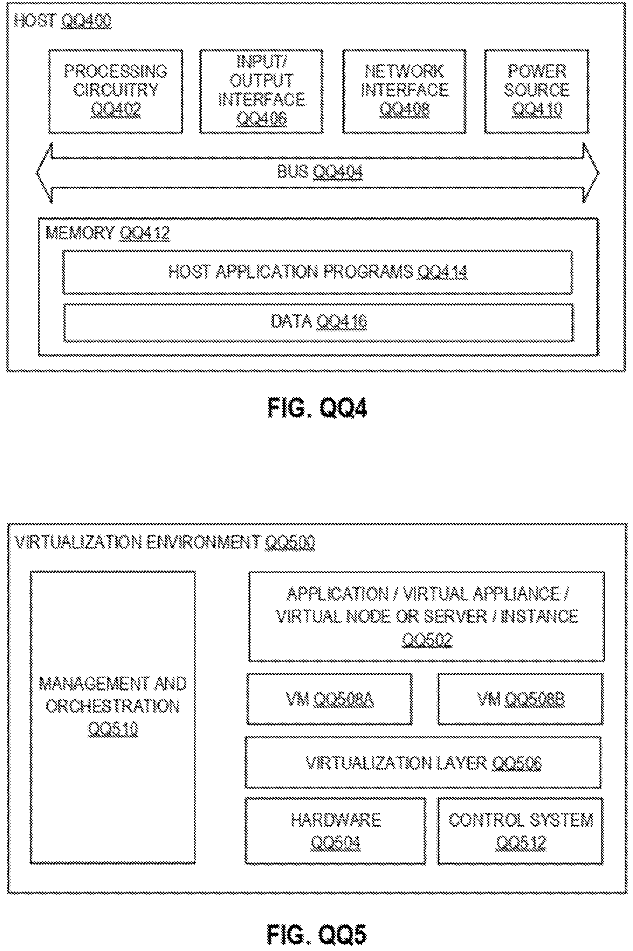

From a network perspective, each bearer (MCG, SCG and split bearer) can be terminated either in MN or in SN. Network side protocol termination options are shown in **Fig. 4** for MR-DC with EPC (EN-DC) and in **Fig. 5** for MR-DC with 5GC (NGEN-DC, NE-DC and NR-DC).

Even if only SCG bearers are configured for a UE, for Signalling Radio Bearer 1 (SRB1) and Signalling Radio Bearer 2 (SRB2) the logical channels are always configured at least in the MCG, i.e. this is still an MR-DC configuration and a primary cell (PCell) always exists.

If only MCG bearers are configured for a UE, i.e. there is no SCG, this is still considered to be an MR-DC configuration, as long as at least one of the bearers is terminated in the SN.

Since a network relies on many Radio Resource Management (RRM) measurements from the UE to perform its function, a framework for the collection of RRM measurements is defined in 3GPP TS 38.331 version 16.6.0. The following excerpt from section 5.5.2.1 of this standard provides a relevant point regarding uplink delay configuration.

*The network applies the procedure as follows:*
- *to configure at most one measurement identity per CG using a reporting configuration with the ul-DelayValueConfig;dure as follows:*
   In 3GPP, measurement of UL PDCP packet average delay in MR-DC scenario has been under discussion and it has been agreed that the termination node of the bearers (i.e. MN in case of MN-terminated MCG/SCG/Split bearers and SN in case of SN-terminated MCG/SCG/Split bearers) can configure the UE with D1 measurements.

In management-based immediate MDT, the Operations Administration and Maintenance (OAM) domain or system provides MDT configurations to the target RAN nodes in the area scope. Each RAN node collects measurements according to the MDT configuration provided by the OAM and forwards the results to the OAM or Trace Collection Entity (TCE).

WO2021/024049 disclose MDT for secondary cell group and secondary cells.

R2-1906890, Dual connectivity handling in MDT-email discussion summary disclose suggested changes for the use case of dual connectivity in MDT and also changes required in MDT framework to handle these changes.

R2-1908064 disclose discussions regarding immediate MDT for DC.

### Summary

There currently exist certain challenge(s). In particular, although the 3GPP standard specifies that a UE must not receive multiple UL PDCP packet average delay configurations for a single type of bearer, recent developments have led to scenarios in which this would happen. For example, consider a scenario in which a UE is in MR-DC, and OAM configures both the MN of the UE and a SN of the UE to collect UL PDCP packet average delay measurements. Both the MN and the SN may select the UE to collect D1 measurements. The MN can configure the UE with *ul-DelayValueConfig* for both MCG bearer and SCG bearers that are terminated at the MN. On the other hand, the SN can configure the same UE with *ul-DelayValueConfig* for both MCG and SCG bearers that are terminated at SN. However, this violates current standardized procedures in which a UE can only be configured with one PDCP queueing delay measurement per cell group (CG). As already noted, 3GPP TS 38.331 version 16.6.0 recites that the network is "to configure at most one measurement identity per CG using a reporting configuration with the *ul-DelayValueConfig".* Therefore, a UE can receive conflicting configurations.

Certain aspects of the present disclosure and their embodiments may provide solutions to these or other challenges.

The invention is defined by the appended claims.

According to a first aspect, there is provided a method in a user equipment (UE). The method comprises: receiving, from a first network node, a first Minimization of Drive Tests (MDT) configuration relating to measurements for a first data radio bearer (DRB) of a first DRB type, wherein the first DRB type comprises one of: Master Cell Group, MCG, bearer type, Secondary Cell Group, SCG, bearer type, and split bearer type; receiving, from a second network node, a second MDT configuration relating to measurements for a second DRB of the first DRB type; and reporting a plurality of measurement reports.

Apparatus for performing the method according to the first aspect is also provided. For example, a further aspect provides a UE, comprising: processing circuitry configured to cause the user equipment to: receive, from a first network node, a first MDT configuration relating to measurements for a first DRB of a first DRB type, wherein the first DRB type comprises one of: Master Cell Group, MCG, bearer type, Secondary Cell Group, SCG, bearer type, and split bearer type; receive, from a second network node, a second MDT configuration relating to measurements for a second DRB of the first DRB type; and report a plurality of measurement reports.

According to a ninth aspect, there is provided a first network node comprising a processor and a memory, said memory containing instructions executable by said processor whereby said apparatus is operative to perform the method according to any of the embodiments of the fourth aspect.

Therefore, the techniques disclosed herein provide a solution to the above-mentioned problem. In some embodiments, the disclosed techniques provide a mechanism via which a UE can select a configuration to apply in situations in which the UE receives multiple MDT configurations for the same radio data bearer type. The disclosed techniques further provide a mechanism which prevents the UE receiving multiple MDT configurations for the same radio data bearer type from the same network node. Thus, conflicts within communication networks operating according to 3GPP standards are avoided.

### Brief Description of the Drawings

Some of the embodiments contemplated herein will now be described more fully with reference to the accompanying drawings, in which:
Fig. 1 illustrates 5G RAN architecture;
Fig. 2 illustrates Radio Protocol Architecture for MCG, SCG and split bearers from a UE perspective in MR-DC with EPC;
Fig. 3 illustrates Radio Protocol Architecture for MCG, SCG and split bearers from a UE perspective in MR-DC with 5GC;
Fig. 4 illustrates Network-side protocol termination options for MCG, SCG and split bearers in MR-DC with EPC;
Fig. 5 illustrates Network-side protocol termination options for MCG, SCG and split bearers in MR-DC with 5GC;
Fig. 6 is a schematic illustrating an OAM, an MN, an SN and a UE;
Fig. 7 is a flow chart illustrating a method performed by a user equipment in accordance with the invention;
Fig. 8 is a flow chart illustrating a method performed by a user equipment in accordance with further embodiments;
Fig. 9 is a flow chart illustrating a method performed by a first network node in accordance with further embodiments;
Fig. QQ1 shows an example of a communication system in accordance with some embodiments;
Fig. QQ2 shows a UE in accordance with some embodiments;
Fig. QQ3 shows a network node in accordance with some embodiments;
Fig. QQ4 is a block diagram of a host;
Fig. QQ5 is a block diagram illustrating a virtualization environment in which functions implemented by some embodiments may be virtualized; and
Fig. QQ6 shows a communication diagram of a host communicating via a network node with a UE over a partially wireless connection in accordance with some embodiments.

### Detailed Description

Some of the embodiments contemplated herein will now be described more fully with reference to the accompanying drawings. Embodiments are provided by way of example to convey the scope of the subject matter to those skilled in the art.

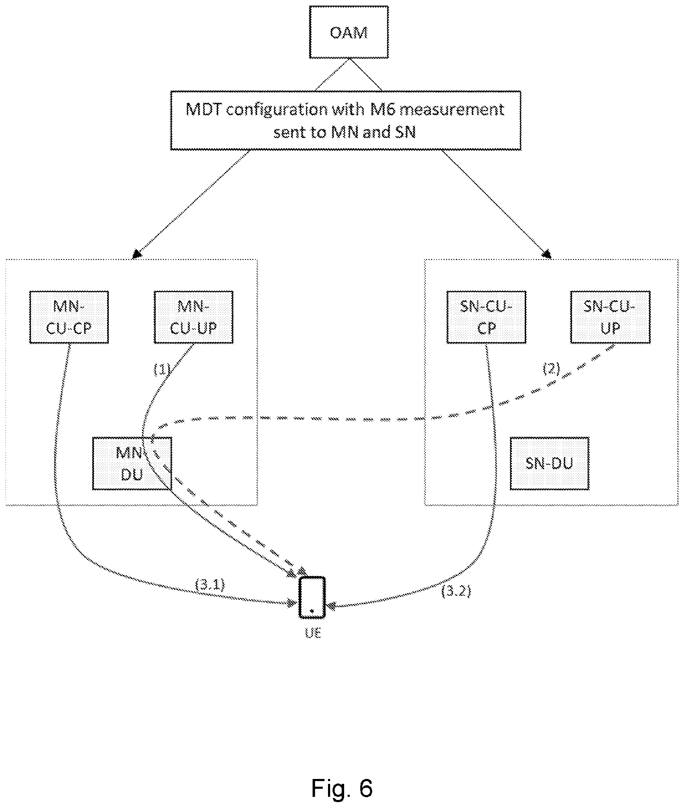

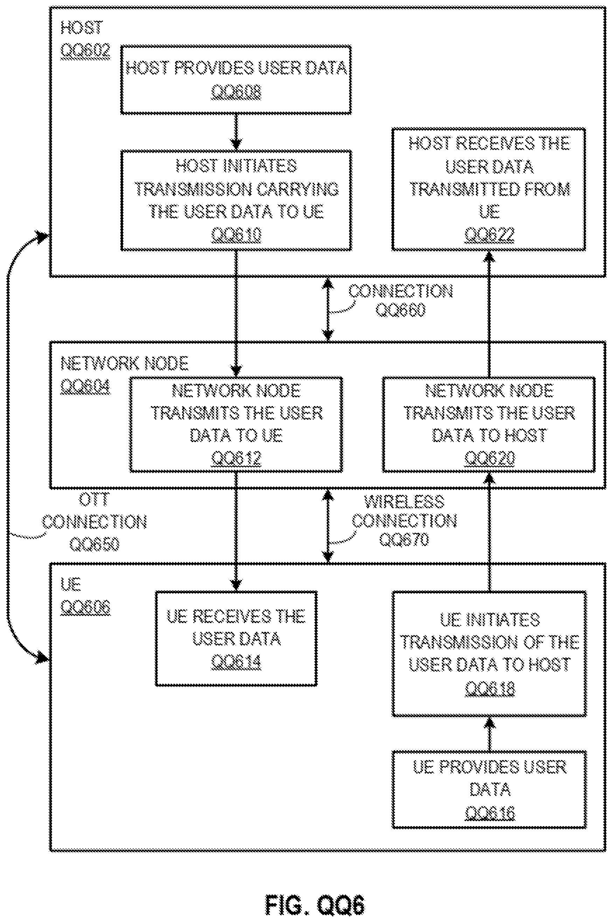

As already discussed, the 3GPP standard specifies that a UE is not allowed to receive multiple UL PDCP packet average delay configurations for a single type of bearer. However, recent agreements in 3GPP have led to scenarios in which this would happen. For example, when both the MN and a SN of a UE receive an MDT configuration for collecting UL PDCP packet average delay measurements. This problem is illustrated further by Fig. 6.

**Fig. 6** schematically shows an OAM, an MN, an SN and a UE. The MN is shown to include an MN-CU-CP, an MN-CU-UP and an MN-DU. The SN is shown to include an SN-CU-CP, an SN-CU-UP and an SN-DU.

The OAM sends, to both the MN and the SN, an MDT configuration with M6 measurement (an M6 measurement is defined above and in 3GPP TS 37.320 version 16.6.0). The following steps then take place. At step 1, labelled (1), the MN configures an MN-terminated MCG bearer. At step 2, labelled (2), the SN configures an SN-terminated MCG bearer. At step 3.1, labelled (3.1), MN-CU-CP configures the UE with a D1 measurement configuration for the MN-terminated MCG bearer (a D1 measurement is also defined above). At step 3.2, labelled (3.2), SN-CU-CP configures the UE with a D1 measurement configuration for the SN-terminated MCG bearer.

Hence the UE receives two D1 measurement configurations for the MCG cells, which is a breach of the expected MDT way of working according to the 3GPP standards. The same situation may happen when, for example, a UE is configured with an SN-terminated SCG bearer and an MN-terminated SCG bearer i.e., two D1 measurement configurations may exist at the UE for SCG cells.

The disclosure herein proposes a solution to the above-mentioned problem.

In some embodiments, a UE can receive multiple UL PDCP packet average delay configuration for a single type of bearer, but cannot receive multiple UL PDCP packet average delay configurations for a single type of bearer from a single node. In other words, if the configurations are for the same type of bearer, they must be from different network nodes. Thus, according to some embodiments, there is provided a method performed by a wireless terminal (or UE) to receive a plurality of UL PDCP packet average delay measurement configurations for the same type of bearer (e.g. MCG bearer, SCG bearer), where each one is received from a different node of the network. In these embodiments, the UE collects and reports multiple measurement reports.

In alternative embodiments, the UE receives multiple D1 measurement configurations related to the same bearer type from the same network node. In these embodiments, the UE selects one measurement configuration for the bearer type. For example, the UE may select the latest received configuration, or the UE may select the first received configuration. The UE then reports according to the selected MDT configuration.

Herein, the terms wireless terminal, wireless device, terminal device and UE are used interchangeably. Similarly, the terms wireless network, network node, network, base station and RAN node are used interchangeably.

An example of the proposed method performed by a user equipment comprises:
1) Receiving, from a network node, at least one MDT configuration associated with delay measurements. For example, the MDT configuration can be for configuring the UE to perform UL PDCP packet average delay measurements.
2) Identifying multiple MDT configurations available for the same bearer type.
3) Collecting UL PDCP packet delay measurements for each Cell Group (e.g. each DRB type).
4) Reporting the measurement reports towards the network.

This method further incorporates procedures performed by a network node to configure a wireless terminal (or UE) to measure UL PDCP packet average delay measurement. According to some embodiments, the method in a network node comprises:
1) Receiving an MDT configuration associated with delay measurements. This MDT configuration could be received from an OAM or a core network node.
2) Identifying the type of bearer configuration configured to a UE in the MDT configuration. The bearer configuration can be, for example, MCG bearer, SCG bearer, SN-terminated MCG bearer, MN-terminated SCG bearer, MN-terminated split bearer, or SN-terminated split bearer
3) Determining whether to configure the UE according to the MDT configuration. On determining to configure the UE, the method also comprises configuring the UE to report UL PDCP packet average delay measurements (e.g. D1 measurements) according to the MDT configuration. In some embodiments, a single node can only provide one UL PDCP packet average delay configuration for a given type of bearer (i.e. DRB type). The DRB type can be, for example, a MCG bearer, SCG bearer, or a split bearer. Therefore, the determining can be based on the type of DRB to which the average delay measurements relate, as identified in step 2.
4) Receiving one or more measurement reports from the UE. The measurement reports may include delay measurements. For example, the measurement reports may comprise UL PDCP packet average delay measurements, e.g. D1 measurements.

Each of the steps of the method performed by the user equipment will now be discussed in more detail with reference to various specific embodiments. In these embodiments, the UE is operating in dual connectivity with an MN and at least one SN.

### Receiving, from a network node, an MDT configuration to perform UL PDCP packet average delay measurements

In this step, the UE receives an MDT configuration from a network node to perform UL PDCP packet average delay measurements (e.g., D1 measurements).

### Identifying multiple MDT configuration availability for the same bearer type

The UE identifies that multiple D1 measurement configurations are present for the same bearer type.

In some embodiments, there will only be one MDT configuration for a given bearer type from a given network node.

In other embodiments, there may be more than one MDT configuration for a given bearer type from a given network node. In some of these embodiments, if there are multiple D1 measurement configurations related to same bearer type from the same network node, UE applies the latest configuration. Alternatively, the UE may apply the configuration that the UE received first. For example, if the UE receives a second D1 measurement configuration for a cell group that already is configured with a first D1 measurement configuration, the UE rejects the second D1 configuration. UE may inform the network node that it is already configured with a D1 measurement configuration.

### Collecting UL PDCP packet average delay measurements for each type of bearer

The UE collects UL PDCP packet average delay measurements for each type of bearer separately. The DRB type can be, for example, a MCG bearer, SCG bearer, or a split bearer. If there were more than one MDT configuration for a given bearer type from a given network node, the UE selects one.

### Reporting the measurement reports towards the network

UE reports the collected measurements towards respective configuring nodes in the network.

As noted above, the disclosed techniques further incorporate procedures performed by a network node to configure a wireless terminal (or UE) to measure UL PDCP packet average delay measurement. These steps will now be discussed in more detail.

### Receiving an MDT configuration associated with delay measurements

A RAN node receives an MDT configuration to perform delay measurements. The MDT configuration could be received, for example, from another network node, an OAM or a core network node. The MDT configuration could comprise M6 measurements. The RAN node identifies that part of the delay measurement configuration (namely UL PDCP packet average delay measurements, i.e. D1 measurements) needs to be collected from the UE.

### Identifying the type of bearer configuration configured to the UE

Upon reception of the configuration, the RAN node identifies the type of bearer (data radio bearer, DRB) configured in the UE along with the PDCP termination point of the bearer. The DRB type can be, for example, a MCG bearer, SCG bearer, or a split bearer. The termination point of the bearer could be at the Master Node or a Secondary Node.

### Configuring UE to calculate uplink PDCP packet average delay measurements

The network node configures the UE to collect UL PDCP packet average delay.

In some embodiments, the network ensures that a single node provides only one UL PDCP packet average delay configuration to the UE for a given type of bearer. Therefore, if the network node identifies that the UE is already configured to report MDT measurements for a DRB of the identified DRB type, the network node will not configure the UE to report further measurements for same DRB type. Alternatively, the network node may de-configure the UE from the existing configuration for the DRB before configuring the UE according to the more recently received MDT configuration.

### Receiving one or more measurement reports from the UE

After configuring the UE to report D1 measurements, the network node receives the corresponding measurement report related to the MDT configuration from the UE.

Thus, according to the techniques disclosed herein, the UE avoids the aforementioned conflict when operating in dual connectivity with a first network node and a second network node. The UE receives an MDT configuration from the network to calculate UL PDCP packet average delay measurement, collects the measurements, and reports back to the network.

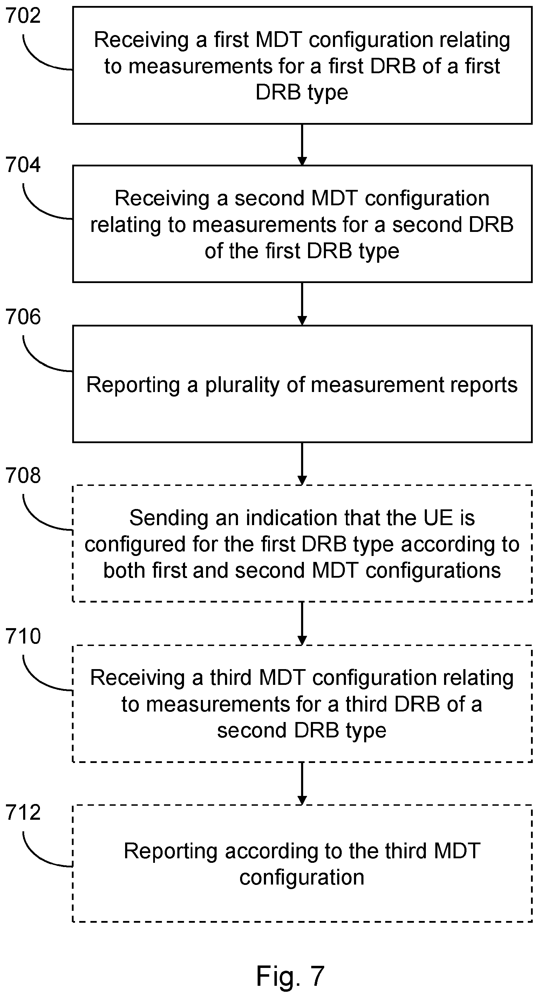

**Fig. 7** is a flow chart illustrating a method in accordance with the invention. The method is performed by a user equipment. The user equipment may be, for example, a UE as shown in Fig. 6, UE QQ112A, QQ112B, QQ112C or QQ112D as described later with reference to Fig. QQ1, UE QQ200 as described later with reference to Fig. QQ2, or UE QQ606 as described later with reference to Fig. QQ6.

In some embodiments, the UE is operating in dual connectivity with a first network node and at least a second network node. The first network node may be a Master Node of the UE. The second network node may be a Secondary Node of the UE. The second network node may be the only SN of the UE or it may be one of a plurality of SNs. The first and/or second network node may be, for example, a gNB as shown in Fig. 1, the SN shown in any of Figs. 4, 5 or 6, Network Node QQ110A or QQ110B shown in Fig. QQ1, Network Node Q300 shown in Fig. QQ3, or Network Node QQ604 shown in Fig. QQ6.

The method comprises, in step 702, receiving, from the first network node, a first MDT configuration relating to measurements for a first DRB having a first DRB type. The first DRB type is an MCG bearer, a SCG bearer or a split bearer.

In step 704, the UE receives, from the second network node, a second MDT configuration relating to measurements for a second DRB of the first DRB type (i.e., the same DRB type as the first DRB).

In step 706, the UE reports a plurality of measurement reports. The measurements according to the first MDT configuration are reported to the first network node, while the measurements according to the second MDT configuration are reported to the second network node.

The measurements (also referred to herein as MDT measurements) for the first DRB type can be measurements for quantifying Radio Access Network packet delay. In some embodiments, the measurements comprise uplink (UL) Packet Data Convergence Protocol (PDCP) packet average delay measurements, also referred to as D1 measurements. The measurements may be in accordance with an M6 measurement comprised in the first MDT configuration (PDCP packet delay measurements per DRB per UE).

In step 708, optionally, the UE sends, to a network node, an indication that the UE is configured for the first DRB type according to both the first MDT configuration and the second MDT configuration.

In some embodiments, optionally, the method further comprises receiving, in step 710, a third MDT configuration relating to measurements for a third DRB of a second DRB type (e.g., different to the first DRB type). In step 712, the UE reports according to the third MDT configuration. In some embodiments, reporting according to the third MDT configuration comprises: performing measurements for the third DRB according to the third MDT configuration; and reporting results of the performed measurements. Thus, in these embodiments, the UE may collect and report measurements per DRB type. The network may be configured to ensure that a single network node can only provide one UL PDCP packet average delay configuration for a given type of bearer (i.e. DRB).

The UE may perform the method of Fig. 7 in response to executing suitably formulated computer readable code. The computer readable code may be embodied or stored on a computer readable medium, such as a memory chip, optical disc, or other storage medium. The computer readable medium may be part of a computer program product.

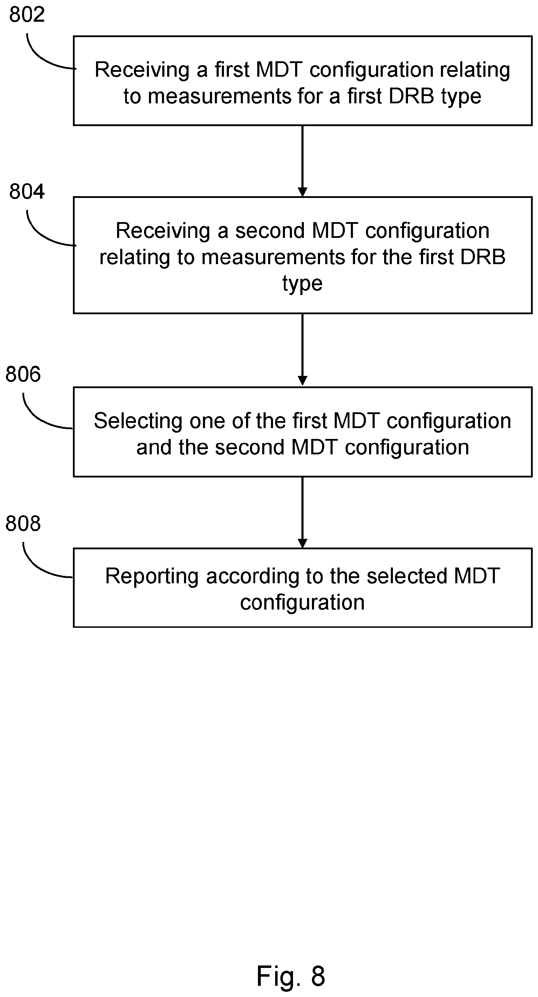

**Fig. 8** is a flow chart illustrating a method in accordance with further embodiments. The method may be performed by a user equipment. The user equipment may be, for example, a UE as shown in Fig. 6, UE QQ112A, QQ112B, QQ112C or QQ112D as described later with reference to Fig. QQ1, UE QQ200 as described later with reference to Fig. QQ2, or UE QQ606 as described later with reference to Fig. QQ6.

In some embodiments, the UE is operating in dual connectivity with a first network node and at least a second network node. The first network node may be a Master Node of the UE. The second network node may be a Secondary Node of the UE. The second network node may be the only SN of the UE or it may be one of a plurality of SNs. The first and/or second network node may be, for example, a gNB as shown in Fig. 1, the SN shown in any of Figs. 4, 5 or 6, Network Node QQ110A or QQ110B shown in Fig. QQ1, Network Node Q300 shown in Fig. QQ3, or Network Node QQ604 shown in Fig. QQ6.

The method comprises receiving, in step 802, a first Minimization of Drive Tests, MDT, configuration relating to measurements for a first data radio bearer, DRB, type; and receiving, in step 804, a second MDT configuration relating to measurements for the first DRB type.

The measurements (also referred to herein as MDT measurements) for the first DRB type can be measurements for quantifying Radio Access Network packet delay. In some embodiments, the measurements comprise uplink, UL, Packet Data Convergence Protocol, PDCP, packet average delay measurements, also referred to as D1 measurements. The measurements may be in accordance with an M6 measurement comprised in the first MDT configuration (PDCP packet delay measurements per DRB per UE).

The first DRB type could be, for example, an MCG bearer, a SCG bearer or a split bearer.

The method also comprises selecting, in step 806, one of the first MDT configuration and the second MDT configuration; and reporting, in step 808, according to the selected MDT configuration.

In some embodiments, the first and second MDT configurations are received from different network nodes. For example, the first MDT configuration may be received from the first network node and the second MDT configuration may be received from the second network node. In some of these embodiments, selecting one MDT configuration comprises selecting the MDT configuration that was received most recently. Alternatively, selecting one MDT configuration can comprise selecting the MDT configuration that was received first. In further embodiments, selecting one MDT configuration can comprise determining that the UE is already configured according to the first MDT configuration for the first DRB type; and selecting (i.e. maintaining) the first MDT configuration for the first DRB type. In these embodiments, the method can further comprise sending, to a network node, an indication that the UE is configured according to the first MDT configuration for the first DRB type.

In alternative embodiments, the first and second MDT configurations are received from the same network node. In some of these embodiments, selecting one MDT configuration comprises selecting the MDT configuration that was received most recently. Alternatively, selecting one MDT configuration can comprise selecting the MDT configuration that was received first. For example, selecting one MDT configuration may comprise determining that the UE is already configured according to the first MDT configuration for the first DRB type; and selecting (i.e. maintaining) the first MDT configuration. In these embodiments, the method can further comprise sending, to a network node, an indication that the UE is configured according to the first MDT configuration for the first DRB type.

In some embodiments, reporting according to the selected MDT configuration comprises: performing measurements for the first DRB type according to the selected MDT configuration; and reporting results of the performed measurements. Reporting the results of the performed measurements can comprise sending the results to the network node that sent the corresponding MDT configuration to the UE.

In some embodiments, the method further comprises receiving a third MDT configuration relating to measurements for a second DRB type; and reporting according to the third MDT configuration. In some embodiments, reporting according to the third MDT configuration comprises: performing measurements for the second DRB type according to the third MDT configuration; and reporting results of the performed measurements. Thus, in these embodiments, the UE may collect and report measurements per DRB type. In some of these embodiments, the UE cannot be configured to report measurements according to more than one MDT configuration for a given DRB type. The network may be configured to ensure that a single network node can only provide one UL PDCP packet average delay configuration for a given type of bearer (i.e. DRB).

The UE may perform the method of Fig. 8 in response to executing suitably formulated computer readable code. The computer readable code may be embodied or stored on a computer readable medium, such as a memory chip, optical disc, or other storage medium. The computer readable medium may be part of a computer program product.

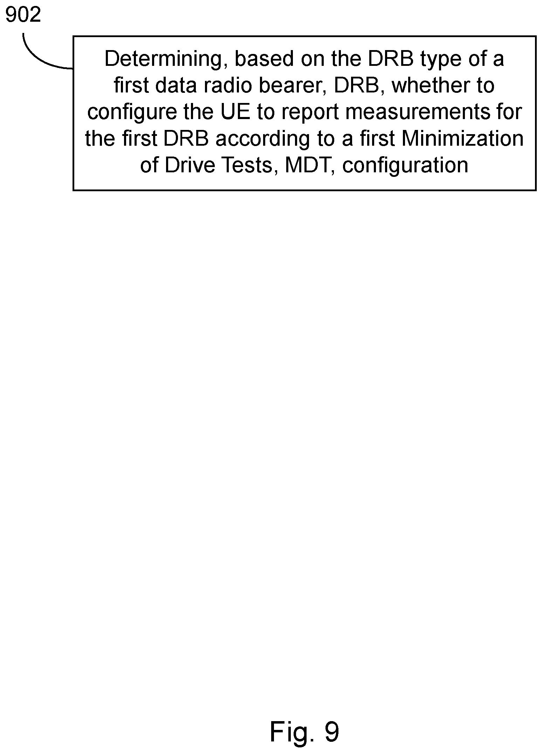

**Fig. 9** is a flow chart illustrating a method performed by a first network node in accordance with further embodiments.

A UE is operating in dual connectivity with the first network node and at least a second network node. The first network node may be a Master Node configured for the UE or a Secondary Node configured for the UE. If the first network node is an SN, it may be the only SN configured for the UE or it may be one of a plurality of SNs. The first network node may be, for example, a gNB as shown in Fig. 1, the MN shown in any of Figs. 4, 5 or 6, the SN shown in any of Figs. 4, 5 or 6, Network Node QQ110A or QQ110B as described later with reference to Fig. QQ1, Network Node Q300 as described later with reference to Fig. QQ3, or Network Node QQ604 as described later with reference to Fig. QQ6.

The second network node may be a Master Node or a Secondary Node of the UE. If the second network node is an SN, it may be the only SN of the UE or it may be one of a plurality of SNs. The second network node may be, for example, a gNB as shown in Fig. 1, the MN shown in any of Figs. 4, 5 or 6, the SN shown in any of Figs. 4, 5 or 6, Network Node QQ110A or QQ110B as described later with reference to Fig. QQ1, Network Node Q300 as described later with reference to Fig. QQ3, or Network Node QQ604 as described later with reference to Fig. QQ6.

The method of Fig. 9 comprises determining, in step 902, based on the DRB type of a first DRB, whether to configure the UE to report measurements for the first DRB according to a first Minimization of Drive Tests, MDT, configuration.

The DRB type could be, for example, an MCG bearer, a SCG bearer or a split bearer.

The first MDT configuration may comprise M6 measurements (PDCP packet delay measurements per DRB per UE).

The measurements (also referred to herein as MDT measurements) for the first DRB type can be measurements for quantifying Radio Access Network packet delay. In some embodiments, the measurements comprise uplink, UL, Packet Data Convergence Protocol, PDCP, packet average delay measurements, also referred to as D1 measurements. The measurements may be in accordance with M6 measurements comprised in the first MDT configuration.

In some embodiments, determining based on the DRB type comprises determining whether the UE is already configured to report MDT measurements for a DRB of the same DRB type as the first DRB. In some of these embodiments, the first network node cannot configure the UE (or any UE) to report measurements according to more than one MDT configuration for a given DRB type.

The method may further comprise, responsive to a determination that the UE has an existing configuration to report measurements for a DRB of the same DRB type as the first DRB, determining not to configure the UE to report measurements for the first DRB according to the first MDT configuration.

Alternatively, the method may comprise, responsive to a determination that the UE has an existing configuration to report measurements for a DRB of the same DRB type as the first DRB, de-configuring the UE from the existing configuration and configuring the UE to report measurements for the first DRB according to the first MDT configuration.

In some embodiments, the method comprises, responsive to a determination that the UE does not have an existing configuration to report measurements for a DRB of the same DRB type as the first DRB, configuring the UE to report measurements for the first DRB according to the first MDT configuration.

The method may further comprise, prior to determining whether to configure the UE to report measurements for the DRB according to a first MDT configuration, receiving the first MDT configuration. The first MDT configuration may be received from an OAM or a core network node.

The first network node may perform the method of Fig. 9 in response to executing suitably formulated computer readable code. The computer readable code may be embodied or stored on a computer readable medium, such as a memory chip, optical disc, or other storage medium. The computer readable medium may be part of a computer program product.

**Fig. QQ1** shows an example of a communication system QQ100 in accordance with some embodiments.

In the example, the communication system QQ100 includes a telecommunication network QQ102 that includes an access network QQ104, such as a radio access network (RAN), and a core network QQ106, which includes one or more core network nodes QQ108. The access network QQ104 includes one or more access network nodes, such as access network nodes QQ110a and QQ110b (one or more of which may be generally referred to as access network nodes QQ110), or any other similar 3^{rd} Generation Partnership Project (3GPP) access node or non-3GPP access point. The access network nodes QQ110 facilitate direct or indirect connection of wireless devices (also referred to interchangeably herein as user equipment (UE)), such as by connecting UEs QQ112a, QQ112b, QQ112c, and QQ112d (one or more of which may be generally referred to as UEs QQ112) to the core network QQ106 over one or more wireless connections. The access network nodes QQ110 may be, for example, access points (APs) (e.g. radio access points), base stations (BSs) (e.g. radio base stations, Node Bs, evolved Node Bs (eNBs) and NR NodeBs (gNBs)).

Unless otherwise indicated, the term 'network node' is used herein to refer to both access network nodes QQ110 and core network nodes QQ108

Example wireless communications over a wireless connection include transmitting and/or receiving wireless signals using electromagnetic waves, radio waves, infrared waves, and/or other types of signals suitable for conveying information without the use of wires, cables, or other material conductors. Moreover, in different embodiments, the communication system QQ100 may include any number of wired or wireless networks, network nodes, UEs, and/or any other components or systems that may facilitate or participate in the communication of data and/or signals whether via wired or wireless connections. The communication system QQ100 may include and/or interface with any type of communication, telecommunication, data, cellular, radio network, and/or other similar type of system.

The wireless devices/UEs QQ112 may be any of a wide variety of communication devices, including wireless devices arranged, configured, and/or operable to communicate wirelessly with the network nodes QQ110 and other communication devices. Similarly, the access network nodes QQ110 are arranged, capable, configured, and/or operable to communicate directly or indirectly with the UEs QQ112 and/or with other network nodes or equipment in the telecommunication network QQ102 to enable and/or provide network access, such as wireless network access, and/or to perform other functions, such as administration in the telecommunication network QQ102.

In the depicted example, the core network QQ106 connects the access network nodes QQ110 to one or more hosts, such as host QQ116. These connections may be direct or indirect via one or more intermediary networks or devices. In other examples, network nodes may be directly coupled to hosts. The core network QQ106 includes one more core network nodes (e.g. core network node QQ108) that are structured with hardware and software components. Features of these components may be substantially similar to those described with respect to the wireless devices/UEs, access network nodes, and/or hosts, such that the descriptions thereof are generally applicable to the corresponding components of the core network node QQ108. Example core network nodes include functions of one or more of a Mobile Switching Center (MSC), Mobility Management Entity (MME), Home Subscriber Server (HSS), Access and Mobility Management Function (AMF), Session Management Function (SMF), Authentication Server Function (AUSF), Subscription Identifier De-concealing function (SIDF), Unified Data Management (UDM), Security Edge Protection Proxy (SEPP), Network Exposure Function (NEF), and/or a User Plane Function (UPF).

The host QQ116 may be under the ownership or control of a service provider other than an operator or provider of the access network QQ104 and/or the telecommunication network QQ102, and may be operated by the service provider or on behalf of the service provider. The host QQ116 may host a variety of applications to provide one or more services. Examples of such applications include the provision of live and/or pre-recorded audio/video content, data collection services, for example, retrieving and compiling data on various ambient conditions detected by a plurality of UEs, analytics functionality, social media, functions for controlling or otherwise interacting with remote devices, functions for an alarm and surveillance center, or any other such function performed by a server.

As a whole, the communication system QQ100 of Fig. QQ1 enables connectivity between the wireless devices/UEs, network nodes, and hosts. In that sense, the communication system may be configured to operate according to predefined rules or procedures, such as specific standards that include, but are not limited to: Global System for Mobile Communications (GSM); Universal Mobile Telecommunications System (UMTS); Long Term Evolution (LTE), and/or other suitable 2G, 3G, 4G, 5G standards, or any applicable future generation standard (e.g. 6G); wireless local area network (WLAN) standards, such as the Institute of Electrical and Electronics Engineers (IEEE) 802.11 standards (WiFi); and/or any other appropriate wireless communication standard, such as the Worldwide Interoperability for Microwave Access (WiMax), Bluetooth, Z-Wave, Near Field Communication (NFC) ZigBee, LiFi, and/or any low-power wide-area network (LPWAN) standards such as LoRa and Sigfox.

In some examples, the telecommunication network QQ102 is a cellular network that implements 3GPP standardized features. Accordingly, the telecommunications network QQ102 may support network slicing to provide different logical networks to different devices that are connected to the telecommunication network QQ102. For example, the telecommunications network QQ102 may provide Ultra Reliable Low Latency Communication (URLLC) services to some UEs, while providing Enhanced Mobile Broadband (eMBB) services to other UEs, and/or Massive Machine Type Communication (mMTC)/Massive loT services to yet further UEs.

In some examples, the UEs QQ112 are configured to transmit and/or receive information without direct human interaction. For instance, a UE may be designed to transmit information to the access network QQ104 on a predetermined schedule, when triggered by an internal or external event, or in response to requests from the access network QQ104. Additionally, a UE may be configured for operating in single- or multi-RAT or multi-standard mode. For example, a UE may operate with any one or combination of Wi-Fi, NR (New Radio) and LTE, i.e. being configured for multi-radio dual connectivity (MR-DC), such as E-UTRAN (Evolved-UMTS Terrestrial Radio Access Network) New Radio - Dual Connectivity (EN-DC).

In the example illustrated in Fig. QQ1, the hub QQ114 communicates with the access network QQ104 to facilitate indirect communication between one or more UEs (e.g. UE QQ112c and/or QQ112d) and access network nodes (e.g. access network node QQ110b). In some examples, the hub QQ114 may be a controller, router, a content source and analytics node, or any of the other communication devices described herein regarding UEs. For example, the hub QQ114 may be a broadband router enabling access to the core network QQ106 for the UEs. As another example, the hub QQ114 may be a controller that sends commands or instructions to one or more actuators in the UEs. Commands or instructions may be received from the UEs, network nodes QQ110, or by executable code, script, process, or other instructions in the hub QQ114. As another example, the hub QQ114 may be a data collector that acts as temporary storage for UE data and, in some embodiments, may perform analysis or other processing of the data. As another example, the hub QQ114 may be a content source. For example, for a UE that is a VR headset, display, loudspeaker or other media delivery device, the hub QQ114 may retrieve VR assets, video, audio, or other media or data related to sensory information via a network node, which the hub QQ114 then provides to the UE either directly, after performing local processing, and/or after adding additional local content. In still another example, the hub QQ114 acts as a proxy server or orchestrator for the UEs, in particular in if one or more of the UEs are low energy loT devices.

The hub QQ114 may have a constant/persistent or intermittent connection to the network node QQ110b. The hub QQ114 may also allow for a different communication scheme and/or schedule between the hub QQ114 and UEs (e.g. UE QQ112c and/or QQ112d), and between the hub QQ114 and the core network QQ106. In other examples, the hub QQ114 is connected to the core network QQ106 and/or one or more UEs via a wired connection. Moreover, the hub QQ114 may be configured to connect to an M2M service provider over the access network QQ104 and/or to another UE over a direct connection. In some scenarios, UEs may establish a wireless connection with the network nodes QQ110 while still connected via the hub QQ114 via a wired or wireless connection. In some embodiments, the hub QQ114 may be a dedicated hub - that is, a hub whose primary function is to route communications to/from the UEs from/to the network node QQ110b. In other embodiments, the hub QQ114 may be a non-dedicated hub - that is, a device which is capable of operating to route communications between the UEs and network node QQ110b, but which is additionally capable of operating as a communication start and/or end point for certain data channels.

**Fig. QQ2** shows a wireless device or UE QQ200 in accordance with some embodiments. As used herein, a UE refers to a device capable, configured, arranged and/or operable to communicate wirelessly with network nodes and/or other UEs. Examples of a wireless device/UE include, but are not limited to, a smart phone, mobile phone, cell phone, voice over IP (VoIP) phone, wireless local loop phone, desktop computer, personal digital assistant (PDA), wireless camera, gaming console or device, music storage device, playback appliance, wearable terminal device, wireless endpoint, mobile station, tablet, laptop, laptop-embedded equipment (LEE), laptop-mounted equipment (LME), smart device, wireless customer-premise equipment (CPE), vehicle-mounted or vehicle embedded/integrated wireless device, etc. Other examples include any UE identified by the 3rd Generation Partnership Project (3GPP), including a narrow band internet of things (NB-loT) UE, a machine type communication (MTC) UE, and/or an enhanced MTC (eMTC) UE.

A wireless device/UE may support device-to-device (D2D) communication, for example by implementing a 3GPP standard for sidelink communication, Dedicated Short-Range Communication (DSRC), vehicle-to-vehicle (V2V), vehicle-to-infrastructure (V2I), or vehicle-to-everything (V2X). In other examples, a UE may not necessarily have a user in the sense of a human user who owns and/or operates the relevant device. Instead, a UE may represent a device that is intended for sale to, or operation by, a human user but which may not, or which may not initially, be associated with a specific human user (e.g. a smart sprinkler controller). Alternatively, a UE may represent a device that is not intended for sale to, or operation by, an end user but which may be associated with or operated for the benefit of a user (e.g. a smart power meter).

The UE QQ200 includes processing circuitry QQ202 that is operatively coupled via a bus QQ204 to an input/output interface QQ206, a power source QQ208, a memory QQ210, a communication interface QQ212, and/or any other component, or any combination thereof. Certain UEs may utilize all or a subset of the components shown in Fig. QQ2. The level of integration between the components may vary from one UE to another UE. Further, certain UEs may contain multiple instances of a component, such as multiple processors, memories, transceivers, transmitters, receivers, etc.

The processing circuitry QQ202 is configured to process instructions and data and may be configured to implement any sequential state machine operative to execute instructions stored as machine-readable computer programs in the memory QQ210. The processing circuitry QQ202 may be implemented as one or more hardware-implemented state machines (e.g. in discrete logic, field-programmable gate arrays (FPGAs), application specific integrated circuits (ASICs), etc.); programmable logic together with appropriate firmware; one or more stored computer programs, general-purpose processors, such as a microprocessor or digital signal processor (DSP), together with appropriate software; or any combination of the above. For example, the processing circuitry QQ202 may include multiple central processing units (CPUs). The processing circuitry QQ202 may be operable to provide, either alone or in conjunction with other UE QQ200 components, such as the memory QQ210, to provide UE QQ200 functionality. For example, the processing circuitry QQ202 may be configured to cause the UE QQ200 to perform the methods as described with reference to Figs 7 and/or 8.

In the example, the input/output interface QQ206 may be configured to provide an interface or interfaces to an input device, output device, or one or more input and/or output devices. Examples of an output device include a speaker, a sound card, a video card, a display, a monitor, a printer, an actuator, an emitter, a smartcard, another output device, or any combination thereof. An input device may allow a user to capture information into the UE QQ200. Examples of an input device include a touch-sensitive or presence-sensitive display, a camera (e.g. a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, a biometric sensor, etc., or any combination thereof. An output device may use the same type of interface port as an input device. For example, a Universal Serial Bus (USB) port may be used to provide an input device and an output device.

In some embodiments, the power source QQ208 is structured as a battery or battery pack. Other types of power sources, such as an external power source (e.g. an electricity outlet), photovoltaic device, or power cell, may be used. The power source QQ208 may further include power circuitry for delivering power from the power source QQ208 itself, and/or an external power source, to the various parts of the UE QQ200 via input circuitry or an interface such as an electrical power cable. Delivering power may be, for example, for charging of the power source QQ208. Power circuitry may perform any formatting, converting, or other modification to the power from the power source QQ208 to make the power suitable for the respective components of the UE QQ200 to which power is supplied.

The memory QQ210 may be or be configured to include memory such as random access memory (RAM), read-only memory (ROM), programmable read-only memory (PROM), erasable programmable read-only memory (EPROM), electrically erasable programmable read-only memory (EEPROM), magnetic disks, optical disks, hard disks, removable cartridges, flash drives, and so forth. In one example, the memory QQ210 includes one or more application programs QQ214, such as an operating system, web browser application, a widget, gadget engine, or other application, and corresponding data QQ216. The memory QQ210 may store, for use by the UE QQ200, any of a variety of various operating systems or combinations of operating systems.

The memory QQ210 may be configured to include a number of physical drive units, such as redundant array of independent disks (RAID), flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as tamper resistant module in the form of a universal integrated circuit card (UICC) including one or more subscriber identity modules (SIMs), such as a USIM and/or ISIM, other memory, or any combination thereof. The UICC may for example be an embedded UICC (eUICC), integrated UICC (iUICC) or a removable UICC commonly known as 'SIM card.' The memory QQ210 may allow the UE QQ200 to access instructions, application programs and the like, stored on transitory or non-transitory memory media, to off-load data, or to upload data. An article of manufacture, such as one utilizing a communication system may be tangibly embodied as or in the memory QQ210, which may be or comprise a device-readable storage medium.

The processing circuitry QQ202 may be configured to communicate with an access network or other network using the communication interface QQ212. The communication interface QQ212 may comprise one or more communication subsystems and may include or be communicatively coupled to an antenna QQ222. The communication interface QQ212 may include one or more transceivers used to communicate, such as by communicating with one or more remote transceivers of another device capable of wireless communication (e.g. another UE or a network node in an access network). Each transceiver may include a transmitter QQ218 and/or a receiver QQ220 appropriate to provide network communications (e.g. optical, electrical, frequency allocations, and so forth). Moreover, the transmitter QQ218 and receiver QQ220 may be coupled to one or more antennas (e.g. antenna QQ222) and may share circuit components, software or firmware, or alternatively be implemented separately.

In some embodiments, communication functions of the communication interface QQ212 may include cellular communication, Wi-Fi communication, LPWAN communication, data communication, voice communication, multimedia communication, short-range communications such as Bluetooth, near-field communication, location-based communication such as the use of the global positioning system (GPS) to determine a location, another like communication function, or any combination thereof. Communications may be implemented in according to one or more communication protocols and/or standards, such as IEEE 802.11, Code Division Multiplexing Access (CDMA), Wideband Code Division Multiple Access (WCDMA), GSM, LTE, New Radio (NR), UMTS, WiMax, Ethernet, transmission control protocol/internet protocol (TCP/IP), synchronous optical networking (SONET), Asynchronous Transfer Mode (ATM), QUIC, Hypertext Transfer Protocol (HTTP), and so forth.

Regardless of the type of sensor, a UE may provide an output of data captured by its sensors, through its communication interface QQ212, via a wireless connection to a network node. Data captured by sensors of a UE can be communicated through a wireless connection to a network node via another UE. The output may be periodic (e.g. once every 15 minutes if it reports the sensed temperature), random (e.g. to even out the load from reporting from several sensors), in response to a triggering event (e.g. when moisture is detected an alert is sent), in response to a request (e.g. a user initiated request), or a continuous stream (e.g. a live video feed of a patient).

As another example, a UE comprises an actuator, a motor, or a switch, related to a communication interface configured to receive wireless input from a network node via a wireless connection. In response to the received wireless input the states of the actuator, the motor, or the switch may change. For example, the UE may comprise a motor that adjusts the control surfaces or rotors of a drone in flight according to the received input or controls a robotic arm performing a medical procedure according to the received input.

A UE, when in the form of an Internet of Things (IoT) device, may be a device for use in one or more application domains, these domains comprising, but not limited to, city wearable technology, extended industrial application and healthcare. Non-limiting examples of such an loT device are devices which are or which are embedded in: a connected refrigerator or freezer, a TV, a connected lighting device, an electricity meter, a robot vacuum cleaner, a voice controlled smart speaker, a home security camera, a motion detector, a thermostat, a smoke detector, a door/window sensor, a flood/moisture sensor, an electrical door lock, a connected doorbell, an air conditioning system like a heat pump, an autonomous vehicle, a surveillance system, a weather monitoring device, a vehicle parking monitoring device, an electric vehicle charging station, a smart watch, a fitness tracker, a head-mounted display for Augmented Reality (AR) or Virtual Reality (VR), a wearable for tactile augmentation or sensory enhancement, a water sprinkler, an animal- or item-tracking device, a sensor for monitoring a plant or animal, an industrial robot, an Unmanned Aerial Vehicle (UAV), and any kind of medical device, like a heart rate monitor or a remote controlled surgical robot. A UE in the form of an loT device comprises circuitry and/or software in dependence on the intended application of the loT device in addition to other components as described in relation to the UE QQ200 shown in Fig. QQ2.

As yet another specific example, in an IoT scenario, a UE may represent a machine or other device that performs monitoring and/or measurements, and transmits the results of such monitoring and/or measurements to another UE and/or a network node. The UE may in this case be an M2M device, which may in a 3GPP context be referred to as an MTC device. As one particular example, the UE may implement the 3GPP NB-loT standard. In other scenarios, a UE may represent a vehicle, such as a car, a bus, a truck, a ship and an airplane, or other equipment that is capable of monitoring and/or reporting on its operational status or other functions associated with its operation.

In practice, any number of UEs may be used together with respect to a single use case. For example, a first UE might be or be integrated in a drone and provide the drone's speed information (obtained through a speed sensor) to a second UE that is a remote controller operating the drone. When the user makes changes from the remote controller, the first UE may adjust the throttle on the drone (e.g. by controlling an actuator) to increase or decrease the drone's speed. The first and/or the second UE can also include more than one of the functionalities described above. For example, a UE might comprise the sensor and the actuator, and handle communication of data for both the speed sensor and the actuators.

**Fig. QQ3** shows a network node QQ300 in accordance with some embodiments. As used herein, network node refers to equipment capable, configured, arranged and/or operable to communicate directly or indirectly with a UE and/or with other network nodes or equipment, in a telecommunication network. Examples of network nodes include, but are not limited to, access network nodes such as access points (APs) (e.g. radio access points), base stations (BSs) (e.g. radio base stations, Node Bs, evolved Node Bs (eNBs) and NR NodeBs (gNBs)). Other examples of network nodes include, but are not limited to, core network nodes such as nodes that include functions of one or more of a Mobile Switching Center (MSC), Mobility Management Entity (MME), Home Subscriber Server (HSS), Access and Mobility Management Function (AMF), Session Management Function (SMF), Authentication Server Function (AUSF), Subscription Identifier De-concealing function (SIDF), Unified Data Management (UDM), Security Edge Protection Proxy (SEPP), Network Exposure Function (NEF), and/or a User Plane Function (UPF).

Base stations may be categorized based on the amount of coverage they provide (or, stated differently, their transmit power level) and so, depending on the provided amount of coverage, may be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS).

Other examples of network nodes include multiple transmission point (multi-TRP) 5G access nodes, multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), Operation and Maintenance (O&M) nodes, Operations Support System (OSS) nodes, Self-Organizing Network (SON) nodes, positioning nodes (e.g. Evolved Serving Mobile Location Centers (E-SMLCs)), and/or Minimization of Drive Tests (MDTs).

The network node QQ300 includes processing circuitry QQ302, a memory QQ304, a communication interface QQ306, and a power source QQ308, and/or any other component, or any combination thereof. The network node QQ300 may be composed of multiple physically separate components (e.g. a NodeB component and a RNC component, or a BTS component and a BSC component, etc.), which may each have their own respective components. In certain scenarios in which the network node QQ300 comprises multiple separate components (e.g. BTS and BSC components), one or more of the separate components may be shared among several network nodes. For example, a single RNC may control multiple NodeBs. In such a scenario, each unique NodeB and RNC pair, may in some instances be considered a single separate network node. In some embodiments, the network node QQ300 may be configured to support multiple radio access technologies (RATs). In such embodiments, some components may be duplicated (e.g. separate memory QQ304 for different RATs) and some components may be reused (e.g. a same antenna QQ310 may be shared by different RATs). The network node QQ300 may also include multiple sets of the various illustrated components for different wireless technologies integrated into network node QQ300, for example GSM, WCDMA, LTE, NR, WiFi, Zigbee, Z-wave, LoRaWAN, Radio Frequency Identification (RFID) or Bluetooth wireless technologies. These wireless technologies may be integrated into the same or different chip or set of chips and other components within network node QQ300.

The processing circuitry QQ302 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node QQ300 components, such as the memory QQ304, to provide network node QQ300 functionality. For example, the processing circuitry QQ302 may be configured to cause the network node to perform the methods as described with reference to Fig. 9.

In some embodiments, the processing circuitry QQ302 includes a system on a chip (SOC). In some embodiments, the processing circuitry QQ302 includes one or more of radio frequency (RF) transceiver circuitry QQ312 and baseband processing circuitry QQ314. In some embodiments, the radio frequency (RF) transceiver circuitry QQ312 and the baseband processing circuitry QQ314 may be on separate chips (or sets of chips), boards, or units, such as radio units and digital units. In alternative embodiments, part or all of RF transceiver circuitry QQ312 and baseband processing circuitry QQ314 may be on the same chip or set of chips, boards, or units.

The memory QQ304 may comprise any form of volatile or non-volatile computer-readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device-readable and/or computer-executable memory devices that store information, data, and/or instructions that may be used by the processing circuitry QQ302. The memory QQ304 may store any suitable instructions, data, or information, including a computer program, software, an application including one or more of logic, rules, code, tables, and/or other instructions capable of being executed by the processing circuitry QQ302 and utilized by the network node QQ300. The memory QQ304 may be used to store any calculations made by the processing circuitry QQ302 and/or any data received via the communication interface QQ306. In some embodiments, the processing circuitry QQ302 and memory QQ304 is integrated.

The communication interface QQ306 is used in wired or wireless communication of signalling and/or data between network nodes, the access network, the core network, and/or a UE. As illustrated, the communication interface QQ306 comprises port(s)/terminal(s) QQ316 to send and receive data, for example to and from a network over a wired connection.

In embodiments where the network node QQ300 is an access network node, the communication interface QQ306 also includes radio front-end circuitry QQ318 that may be coupled to, or in certain embodiments a part of, the antenna QQ310. In embodiments where the network node QQ300 is a core network node, the core network node may not include radio front-end circuitry QQ318 and antenna QQ310. Radio front-end circuitry QQ318 comprises filters QQ320 and amplifiers QQ322. The radio front-end circuitry QQ318 may be connected to an antenna QQ310 and processing circuitry QQ302. The radio front-end circuitry may be configured to condition signals communicated between antenna QQ310 and processing circuitry QQ302. The radio front-end circuitry QQ318 may receive digital data that is to be sent out to other network nodes or UEs via a wireless connection. The radio front-end circuitry QQ318 may convert the digital data into a radio signal having the appropriate channel and bandwidth parameters using a combination of filters QQ320 and/or amplifiers QQ322. The radio signal may then be transmitted via the antenna QQ310. Similarly, when receiving data, the antenna QQ310 may collect radio signals which are then converted into digital data by the radio front-end circuitry QQ318. The digital data may be passed to the processing circuitry QQ302. In other embodiments, the communication interface may comprise different components and/or different combinations of components.

In certain alternative embodiments, the access network node QQ300 does not include separate radio front-end circuitry QQ318, instead, the processing circuitry QQ302 includes radio front-end circuitry and is connected to the antenna QQ310. Similarly, in some embodiments, all or some of the RF transceiver circuitry QQ312 is part of the communication interface QQ306. In still other embodiments, the communication interface QQ306 includes one or more ports or terminals QQ316, the radio front-end circuitry QQ318, and the RF transceiver circuitry QQ312, as part of a radio unit (not shown), and the communication interface QQ306 communicates with the baseband processing circuitry QQ314, which is part of a digital unit (not shown).

The antenna QQ310 may include one or more antennas, or antenna arrays, configured to send and/or receive wireless signals. The antenna QQ310 may be coupled to the radio front-end circuitry QQ318 and may be any type of antenna capable of transmitting and receiving data and/or signals wirelessly. In certain embodiments, the antenna QQ310 is separate from the network node QQ300 and connectable to the network node QQ300 through an interface or port.

The antenna QQ310, communication interface QQ306, and/or the processing circuitry QQ302 may be configured to perform any receiving operations and/or certain obtaining operations described herein as being performed by the network node. Any information, data and/or signals may be received from a UE, another network node and/or any other network equipment. Similarly, the antenna QQ310, the communication interface QQ306, and/or the processing circuitry QQ302 may be configured to perform any transmitting operations described herein as being performed by the network node. Any information, data and/or signals may be transmitted to a UE, another network node and/or any other network equipment.

The power source QQ308 provides power to the various components of network node QQ300 in a form suitable for the respective components (e.g. at a voltage and current level needed for each respective component). The power source QQ308 may further comprise, or be coupled to, power management circuitry to supply the components of the network node QQ300 with power for performing the functionality described herein. For example, the network node QQ300 may be connectable to an external power source (e.g. the power grid, an electricity outlet) via an input circuitry or interface such as an electrical cable, whereby the external power source supplies power to power circuitry of the power source QQ308. As a further example, the power source QQ308 may comprise a source of power in the form of a battery or battery pack which is connected to, or integrated in, power circuitry. The battery may provide backup power should the external power source fail.

Embodiments of the network node QQ300 may include additional components beyond those shown in Fig. QQ3 for providing certain aspects of the network node's functionality, including any of the functionality described herein and/or any functionality necessary to support the subject matter described herein. For example, the network node QQ300 may include user interface equipment to allow input of information into the network node QQ300 and to allow output of information from the network node QQ300. This may allow a user to perform diagnostic, maintenance, repair, and other administrative functions for the network node QQ300.

**Fig. QQ4** is a block diagram of a host QQ400, which may be an embodiment of the host QQ116 of Fig. QQ1, in accordance with various aspects described herein. As used herein, the host QQ400 may be or comprise various combinations hardware and/or software, including a standalone server, a blade server, a cloud-implemented server, a distributed server, a virtual machine, container, or processing resources in a server farm. The host QQ400 may provide one or more services to one or more UEs.

The host QQ400 includes processing circuitry QQ402 that is operatively coupled via a bus QQ404 to an input/output interface QQ406, a network interface QQ408, a power source QQ410, and a memory QQ412. Other components may be included in other embodiments. Features of these components may be substantially similar to those described with respect to the devices of previous figures, such as Figs. QQ2 and QQ3, such that the descriptions thereof are generally applicable to the corresponding components of host QQ400.

The memory QQ412 may include one or more computer programs including one or more host application programs QQ414 and data QQ416, which may include user data, e.g. data generated by a UE for the host QQ400 or data generated by the host QQ400 for a UE. Embodiments of the host QQ400 may utilize only a subset or all of the components shown. The host application programs QQ414 may be implemented in a container-based architecture and may provide support for video codecs (e.g. Versatile Video Coding (VVC), High Efficiency Video Coding (HEVC), Advanced Video Coding (AVC), MPEG, VP9) and audio codecs (e.g. FLAC, Advanced Audio Coding (AAC), MPEG, G.711), including transcoding for multiple different classes, types, or implementations of UEs (e.g. handsets, desktop computers, wearable display systems, heads-up display systems). The host application programs QQ414 may also provide for user authentication and licensing checks and may periodically report health, routes, and content availability to a central node, such as a device in or on the edge of a core network. Accordingly, the host QQ400 may select and/or indicate a different host for over-the-top services for a UE. The host application programs QQ414 may support various protocols, such as the HTTP Live Streaming (HLS) protocol, Real-Time Messaging Protocol (RTMP), Real-Time Streaming Protocol (RTSP), Dynamic Adaptive Streaming over HTTP (MPEG-DASH), etc.

**Fig. QQ5** is a block diagram illustrating a virtualization environment QQ500 in which functions implemented by some embodiments may be virtualized. In the present context, virtualizing means creating virtual versions of apparatuses or devices which may include virtualizing hardware platforms, storage devices and networking resources. As used herein, virtualization can be applied to any device described herein, or components thereof, and relates to an implementation in which at least a portion of the functionality is implemented as one or more virtual components. Some or all of the functions described herein may be implemented as virtual components executed by one or more virtual machines (VMs) implemented in one or more virtual environments QQ500 hosted by one or more of hardware nodes, such as a hardware computing device that operates as an access network node, a wireless device/UE, a core network node, or host. Further, in embodiments in which the virtual node does not require radio connectivity (e.g. a core network node or host), then the node may be entirely virtualized.

Applications QQ502 (which may alternatively be called software instances, virtual appliances, network functions, virtual nodes, virtual network functions, etc.) are run in the virtualization environment QQ500 to implement some of the features, functions, and/or benefits of some of the embodiments disclosed herein.

Hardware QQ504 includes processing circuitry, memory that stores software and/or instructions executable by hardware processing circuitry, and/or other hardware devices as described herein, such as a network interface, input/output interface, and so forth. Software may be executed by the processing circuitry to instantiate one or more virtualization layers QQ506 (also referred to as hypervisors or virtual machine monitors (VMMs)), provide VMs QQ508a and QQ508b (one or more of which may be generally referred to as VMs QQ508), and/or perform any of the functions, features and/or benefits described in relation with some embodiments described herein. The virtualization layer QQ506 may present a virtual operating platform that appears like networking hardware to the VMs QQ508.

The VMs QQ508 comprise virtual processing, virtual memory, virtual networking or interface and virtual storage, and may be run by a corresponding virtualization layer QQ506. Different embodiments of the instance of a virtual appliance QQ502 may be implemented on one or more of VMs QQ508, and the implementations may be made in different ways. Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, a VM QQ508 may be a software implementation of a physical machine that runs programs as if they were executing on a physical, non-virtualized machine. Each of the VMs QQ508, and that part of hardware QQ504 that executes that VM, be it hardware dedicated to that VM and/or hardware shared by that VM with others of the VMs, forms separate virtual network elements. Still in the context of NFV, a virtual network function is responsible for handling specific network functions that run in one or more VMs QQ508 on top of the hardware QQ504 and corresponds to the application QQ502.

Hardware QQ504 may be implemented in a standalone network node with generic or specific components. Hardware QQ504 may implement some functions via virtualization. Alternatively, hardware QQ504 may be part of a larger cluster of hardware (e.g. such as in a data center or CPE) where many hardware nodes work together and are managed via management and orchestration QQ510, which, among others, oversees lifecycle management of applications QQ502. In some embodiments, hardware QQ504 is coupled to one or more radio units that each include one or more transmitters and one or more receivers that may be coupled to one or more antennas. Radio units may communicate directly with other hardware nodes via one or more appropriate network interfaces and may be used in combination with the virtual components to provide a virtual node with radio capabilities, such as a radio access node or a base station. In some embodiments, some signalling can be provided with the use of a control system QQ512 which may alternatively be used for communication between hardware nodes and radio units.

**Fig. QQ6** shows a communication diagram of a host QQ602 communicating via a network node QQ604 with a UE QQ606 over a partially wireless connection in accordance with some embodiments. Example implementations, in accordance with various embodiments, of the UE (such as a UE QQ112a of Fig. QQ1 and/or UE QQ200 of Fig. QQ2), network node (such as network node QQ110a of Fig. QQ1 and/or network node QQ300 of Fig. QQ3), and host (such as host QQ116 of Fig. QQ1 and/or host QQ400 of Fig. QQ4) discussed in the preceding paragraphs will now be described with reference to Fig. QQ6.

Like host QQ400, embodiments of host QQ602 include hardware, such as a communication interface, processing circuitry, and memory. The host QQ602 also includes software, which is stored in or accessible by the host QQ602 and executable by the processing circuitry. The software includes a host application that may be operable to provide a service to a remote user, such as the UE QQ606 connecting via an over-the-top (OTT) connection QQ650 extending between the UE QQ606 and host QQ602. In providing the service to the remote user, a host application may provide user data which is transmitted using the OTT connection QQ650.

The network node QQ604 includes hardware enabling it to communicate with the host QQ602 and UE QQ606. The connection QQ660 may be direct or pass through a core network (like core network QQ106 of Fig. QQ1) and/or one or more other intermediate networks, such as one or more public, private, or hosted networks. For example, an intermediate network may be a backbone network or the Internet.

The UE QQ606 includes hardware and software, which is stored in or accessible by UE QQ606 and executable by the UE's processing circuitry. The software includes a client application, such as a web browser or operator-specific "app" that may be operable to provide a service to a human or non-human user via UE QQ606 with the support of the host QQ602. In the host QQ602, an executing host application may communicate with the executing client application via the OTT connection QQ650 terminating at the UE QQ606 and host QQ602. In providing the service to the user, the UE's client application may receive request data from the host's host application and provide user data in response to the request data. The OTT connection QQ650 may transfer both the request data and the user data. The UE's client application may interact with the user to generate the user data that it provides to the host application through the OTT connection QQ650.

The OTT connection QQ650 may extend via a connection QQ660 between the host QQ602 and the network node QQ604 and via a wireless connection QQ670 between the network node QQ604 and the UE QQ606 to provide the connection between the host QQ602 and the UE QQ606. The connection QQ660 and wireless connection QQ670, over which the OTT connection QQ650 may be provided, have been drawn abstractly to illustrate the communication between the host QQ602 and the UE QQ606 via the network node QQ604, without explicit reference to any intermediary devices and the precise routing of messages via these devices.

As an example of transmitting data via the OTT connection QQ650, in step QQ608, the host QQ602 provides user data, which may be performed by executing a host application. In some embodiments, the user data is associated with a particular human user interacting with the UE QQ606. In other embodiments, the user data is associated with a UE QQ606 that shares data with the host QQ602 without explicit human interaction. In step QQ610, the host QQ602 initiates a transmission carrying the user data towards the UE QQ606. The host QQ602 may initiate the transmission responsive to a request transmitted by the UE QQ606. The request may be caused by human interaction with the UE QQ606 or by operation of the client application executing on the UE QQ606. The transmission may pass via the network node QQ604, in accordance with the teachings of the embodiments described throughout this disclosure. Accordingly, in step QQ612, the network node QQ604 transmits to the UE QQ606 the user data that was carried in the transmission that the host QQ602 initiated, in accordance with the teachings of the embodiments described throughout this disclosure. In step QQ614, the UE QQ606 receives the user data carried in the transmission, which may be performed by a client application executed on the UE QQ606 associated with the host application executed by the host QQ602.

In some examples, the UE QQ606 executes a client application which provides user data to the host QQ602. The user data may be provided in reaction or response to the data received from the host QQ602. Accordingly, in step QQ616, the UE QQ606 may provide user data, which may be performed by executing the client application. In providing the user data, the client application may further consider user input received from the user via an input/output interface of the UE QQ606. Regardless of the specific manner in which the user data was provided, the UE QQ606 initiates, in step QQ618, transmission of the user data towards the host QQ602 via the network node QQ604. In step QQ620, in accordance with the teachings of the embodiments described throughout this disclosure, the network node QQ604 receives user data from the UE QQ606 and initiates transmission of the received user data towards the host QQ602. In step QQ622, the host QQ602 receives the user data carried in the transmission initiated by the UE QQ606.

In an example scenario, factory status information may be collected and analysed by the host QQ602. As another example, the host QQ602 may process audio and video data which may have been retrieved from a UE for use in creating maps. As another example, the host QQ602 may collect and analyse real-time data to assist in controlling vehicle congestion (e.g. controlling traffic lights). As another example, the host QQ602 may store surveillance video uploaded by a UE. As another example, the host QQ602 may store or control access to media content such as video, audio, VR or AR which it can broadcast, multicast or unicast to UEs. As other examples, the host QQ602 may be used for energy pricing, remote control of non-time critical electrical load to balance power generation needs, location services, presentation services (such as compiling diagrams etc. from data collected from remote devices), or any other function of collecting, retrieving, storing, analysing and/or transmitting data.

In some examples, a measurement procedure may be provided for the purpose of monitoring data rate, latency and other factors on which the one or more embodiments improve. There may further be an optional network functionality for reconfiguring the OTT connection QQ650 between the host QQ602 and UE QQ606, in response to variations in the measurement results. The measurement procedure and/or the network functionality for reconfiguring the OTT connection may be implemented in software and hardware of the host QQ602 and/or UE QQ606. In some embodiments, sensors (not shown) may be deployed in or in association with other devices through which the OTT connection QQ650 passes; the sensors may participate in the measurement procedure by supplying values of the monitored quantities exemplified above, or supplying values of other physical quantities from which software may compute or estimate the monitored quantities. The reconfiguring of the OTT connection QQ650 may include message format, retransmission settings, preferred routing etc.; the reconfiguring need not directly alter the operation of the network node QQ604. Such procedures and functionalities may be known and practiced in the art. In certain embodiments, measurements may involve proprietary UE signaling that facilitates measurements of throughput, propagation times, latency and the like, by the host QQ602. The measurements may be implemented in that software causes messages to be transmitted, in particular empty or 'dummy' messages, using the OTT connection QQ650 while monitoring propagation times, errors, etc.

Although the computing devices described herein (e.g. UEs, network nodes, hosts) may include the illustrated combination of hardware components, other embodiments may comprise computing devices with different combinations of components. It is to be understood that these computing devices may comprise any suitable combination of hardware and/or software needed to perform the tasks, features, functions and methods disclosed herein. Determining, calculating, obtaining or similar operations described herein may be performed by processing circuitry, which may process information by, for example, converting the obtained information into other information, comparing the obtained information or converted information to information stored in the network node, and/or performing one or more operations based on the obtained information or converted information, and as a result of said processing making a determination. Moreover, while components are depicted as single boxes located within a larger box, or nested within multiple boxes, in practice, computing devices may comprise multiple different physical components that make up a single illustrated component, and functionality may be partitioned between separate components. For example, a communication interface may be configured to include any of the components described herein, and/or the functionality of the components may be partitioned between the processing circuitry and the communication interface. In another example, non-computationally intensive functions of any of such components may be implemented in software or firmware and computationally intensive functions may be implemented in hardware.

In certain embodiments, some or all of the functionality described herein may be provided by processing circuitry executing instructions stored on in memory, which in certain embodiments may be a computer program product in the form of a non-transitory computer-readable storage medium. In alternative embodiments, some or all of the functionality may be provided by the processing circuitry without executing instructions stored on a separate or discrete device-readable storage medium, such as in a hard-wired manner. In any of those particular embodiments, whether executing instructions stored on a non-transitory computer-readable storage medium or not, the processing circuitry can be configured to perform the described functionality. The benefits provided by such functionality are not limited to the processing circuitry alone or to other components of the computing device, but are enjoyed by the computing device as a whole, and/or by end users and a wireless network generally.

The foregoing merely illustrates the principles of the disclosure. Various modifications and alterations to the described embodiments will be apparent to those skilled in the art in view of the teachings herein. It will thus be appreciated that those skilled in the art will be able to devise numerous systems, arrangements, and procedures that, although not explicitly shown or described herein, embody the principles of the disclosure and can be thus within the scope of the disclosure, wherein the scope of the invention is defined by the claims.

## Claims

1. A method performed by a user equipment, UE, (QQ112) the method **characterised by**:
receiving (702), from a first network node (QQ110A), a first Minimization of Drive Tests, MDT, configuration relating to measurements for a first data radio bearer, DRB, of a first DRB type, wherein the first DRB type comprises one of: Master Cell Group, MCG, bearer type, Secondary Cell Group, SCG, bearer type, and split bearer type;
receiving (704), from a second network node (QQ110B), a second MDT configuration relating to measurements for a second DRB of the first DRB type; and
reporting (706) a plurality of measurement reports, wherein measurements according to the first MDT configuration are reported to the first network node, while measurements according to the second MDT configuration are reported to the second network node, and
wherein the step of reporting (706) a plurality of measurement reports is performed after the steps of receiving (702) the first MDT configuration and receiving (704) the second MDT configuration.

2. The method of claim 1, wherein reporting (706) the plurality of measurement reports comprises:
performing measurements for the first DRB according to the first MDT configuration;
performing measurements for the second DRB according to the second MDT configuration; and
reporting results of the performed measurements.

3. The method of any of claims 1-2, wherein the measurements according to one or more of the first and second MDT configuration quantify Radio Access Network packet delay.

4. The method of any of claims 1-3, wherein the measurements according to one or more of the first and second MDT configuration comprise uplink, UL, Packet Data Convergence Protocol, PDCP, packet average delay measurements.

5. The method of claim 4, wherein the measurements according to one or more of the first and second MDT configuration comprise D1 measurements.

6. The method of any of claims 1-5, wherein the UE is operating in dual connectivity with the first network node (QQ110A) and the second network node (QQ110B).

7. The method of any of claims 1-6, wherein the first network node (QQ110A) is a Master Node, MN, and the second network node (QQ110B) is a Secondary Node, SN.

8. The method of any of claims 1-7, wherein the method further comprises:
sending (708), to a network node, an indication that the UE is configured for the first DRB type according to both the first MDT configuration and the second MDT configuration.

9. The method of any of claims 1-8, wherein the method further comprises:
receiving (710) a third MDT configuration relating to measurements for a third DRB of a second DRB type; and
reporting (712) according to the third MDT configuration.

10. The method of claim 9, wherein reporting (712) according to the third MDT configuration comprises:
performing measurements for the third DRB according to the third MDT configuration; and
reporting results of the performed measurements for the third DRB.

11. A user equipment, UE, **characterised by** being configured to:
receive (702), from a first network node (QQ110A), a first Minimization of Drive Tests, MDT, configuration relating to measurements for a first data radio bearer, DRB, of a first DRB type, wherein the first DRB type comprises one of: Master Cell Group, MCG, bearer type, Secondary Cell Group, SCG, bearer type, and split bearer type;
receive (704), from a second network node (QQ110B), a second MDT configuration relating to measurements for a second DRB of the first DRB type; and
report (706) a plurality of measurement reports, wherein the UE is configured to report measurements according to the first MDT configuration to the first network node, while the UE is configured to report measurements according to the second MDT configuration to the second network node, and
wherein the UE is configured to report the plurality of measurement reports after it receives the first and second MDT configurations.

12. The UE according to claim 11, wherein the UE is further configured to perform the method according to any one of claims 2 to 10.

## Patentansprüche

1. Verfahren, das durch eine Benutzereinrichtung, UE, (QQ112) durchgeführt wird, wobei das Verfahren durch Folgendes gekennzeichnet ist:
Empfangen (702), von einem ersten Netzknoten (QQ110A), einer ersten Konfiguration zur Minimierung von Fahrtests, MDT-Konfiguration, in Bezug auf Messungen für einen ersten Datenfunkträger, DRB, eines ersten DRB-Typs, wobei der erste DRB-Typ einen von Folgenden umfasst: einen Master-Zellengruppen-Trägertyp, MCG-Trägertyp, einen Sekundärzellengruppen-Trägertyp, SCG-Trägertyp, und einen geteilten Trägertyp;
Empfangen (704), von einem zweiten Netzknoten (QQ110B), einer zweiten MDT-Konfiguration in Bezug auf Messungen für einen zweiten DRB des ersten DRB-Typs; und
Berichten (706) einer Vielzahl von Messberichten, wobei Messungen gemäß der ersten MDT-Konfiguration an den ersten Netzknoten berichtet werden, während Messungen gemäß der zweiten MDT-Konfiguration an den zweiten Netzknoten berichtet werden, und
wobei der Schritt des Berichtens (706) einer Vielzahl von Messberichten nach dem Schritt des Empfangens (702) der ersten MDT-Konfiguration und des Empfangens (704) der zweiten MDT-Konfiguration durchgeführt wird.

2. Verfahren nach Anspruch 1, wobei das Berichten (706) der Vielzahl von Messberichten Folgendes umfasst:
Durchführen von Messungen für den ersten DRB gemäß der ersten MDT-Konfiguration;
Durchführen von Messungen für den zweiten DRB gemäß der zweiten MDT-Konfiguration; und
Berichten von Ergebnissen der durchgeführten Messungen.

3. Verfahren nach einem der Ansprüche 1-2, wobei die Messungen gemäß einer oder mehrerer der ersten und der zweiten MDT-Konfiguration eine Paketverzögerung für das Funkzugangsnetz quantifizieren.

4. Verfahren nach einem der Ansprüche 1-3, wobei die Messungen gemäß einer oder mehrerer der ersten und der zweiten MDT-Konfiguration Messungen der durchschnittlichen Verzögerung von Uplink-Paketen, UL-Paketen, im Paketdatenkonvergenzprotokoll, PDCP, umfassen.

5. Verfahren nach Anspruch 4, wobei die Messungen gemäß einer oder mehrerer der ersten und der zweiten MDT-Konfiguration D1-Messungen umfassen.

6. Verfahren nach einem der Ansprüche 1-5, wobei die UE in dualer Konnektivität mit dem ersten Netzknoten (QQ110A) und dem zweiten Netzknoten (QQ110B) betrieben wird.

7. Verfahren nach einem der Ansprüche 1-6, wobei der erste Netzknoten (QQ110A) ein Masterknoten, MN, ist und der zweite Netzknoten (QQ110B) ein Sekundärknoten, SN, ist.

8. Verfahren nach einem der Ansprüche 1-7, wobei das Verfahren ferner Folgendes umfasst:
Senden (708), an einen Netzknoten, einer Angabe, dass die UE für den ersten DRB-Typ gemäß sowohl der ersten MDT-Konfiguration als auch der zweiten MDT-Konfiguration konfiguriert ist.

9. Verfahren nach einem der Ansprüche 1-8, wobei das Verfahren ferner Folgendes umfasst:
Empfangen (710) einer dritten MDT-Konfiguration in Bezug auf Messungen für einen dritten DRB eines zweiten DRB-Typs; und
Berichten (712) gemäß der dritten MDT-Konfiguration.

10. Verfahren nach Anspruch 9, wobei das Berichten (712) gemäß der dritten MDT-Konfiguration Folgendes umfasst:
Durchführen von Messungen für den dritten DRB gemäß der dritten MDT-Konfiguration; und
Berichten von Ergebnissen der durchgeführten Messungen für den dritten DRB.

11. Benutzereinrichtung, UE, die **dadurch gekennzeichnet** ist, zu Folgendem konfiguriert zu sein:
Empfangen (702), von einem ersten Netzknoten (QQ110A), einer ersten Konfiguration zur Minimierung von Fahrtests, MDT-Konfiguration, in Bezug auf Messungen für einen ersten Datenfunkträger, DRB, eines ersten DRB-Typs, wobei der erste DRB-Typ einen von Folgenden umfasst: einen Master-Zellengruppen-Trägertyp, MCG-Trägertyp, einen Sekundärzellengruppen-Trägertyp, SCG-Trägertyp, und einen geteilten Trägertyp;
Empfangen (704), von einem zweiten Netzknoten (QQ110B), einer zweiten MDT-Konfiguration in Bezug auf Messungen für einen zweiten DRB des ersten DRB-Typs; und
Berichten (706) einer Vielzahl von Messberichten, wobei die UE dazu konfiguriert ist, Messungen gemäß der ersten MDT-Konfiguration an den ersten Netzknoten zu berichten, während die UE dazu konfiguriert ist, Messungen gemäß der zweiten MDT-Konfiguration an den zweiten Netzknoten zu berichten, und
wobei die UE dazu konfiguriert ist, die Vielzahl von Messberichten zu berichten, nachdem sie die erste und die zweite MDT-Konfiguration empfangen hat.

12. UE nach Anspruch 11, wobei die UE ferner dazu konfiguriert ist, das Verfahren nach einem der Ansprüche 2 bis 10 durchzuführen.

## Revendications

1. Procédé réalisé par un équipement utilisateur, UE, (QQ112), le procédé étant **caractérisé par** :
la réception (702), à partir d'un premier nœud de réseau (QQ110A), d'une première configuration de minimisation de tests de couverture, MDT, relative aux mesures pour un premier support radio de données, DRB, d'un premier type DRB, le premier type DRB comprenant l'un des éléments suivants : un type de support de groupe de cellule maître, MCG, un type de support de groupe de cellule secondaire, SCG, et un type de support divisé ;
la réception (704), à partir d'un second nœud de réseau (QQ110B), d'une seconde configuration MDT relative aux mesures pour un second DRB du premier type DRB ; et
le rapport (706) d'une pluralité de rapports de mesure, dans lequel les mesures selon la première configuration MDT sont rapportées au premier nœud de réseau, tandis que les mesures selon la seconde configuration MDT sont rapportées au second nœud de réseau, et
dans lequel l'étape de rapport (706) d'une pluralité de rapports de mesure est effectuée après les étapes de réception (702) de la première configuration MDT et de réception (704) de la seconde configuration MDT.

2. Procédé selon la revendication 1, dans lequel le rapport (706) de la pluralité de rapports de mesure comprend :
la réalisation de mesures pour le premier DRB selon la première configuration MDT ;
la réalisation de mesures pour le second DRB selon la seconde configuration MDT ; et
le rapport de résultats des mesures effectuées.

3. Procédé selon l'une quelconque des revendications 1 à 2, dans lequel les mesures selon une ou plusieurs des première et seconde configurations MDT quantifient un retard de paquets de réseau d'accès radio.

4. Procédé selon l'une quelconque des revendications 1 à 3, dans lequel les mesures selon une ou plusieurs des première et seconde configurations MDT comprennent des mesures de délai moyen de paquets de protocole de convergence de données par paquets, PDCP, de liaison montante, UL.

5. Procédé selon la revendication 4, dans lequel les mesures selon une ou plusieurs des première et seconde configurations MDT comprennent des mesures D1.

6. Procédé selon l'une quelconque des revendications 1 à 5, dans lequel l'UE fonctionne en double connectivité avec le premier nœud de réseau (QQ110A) et le second nœud de réseau (QQ110B).

7. Procédé selon l'une quelconque des revendications 1 à 6, dans lequel le premier nœud de réseau (QQ110A) est un nœud maître, MN, et le second nœud de réseau (QQ110B) est un nœud secondaire, SN.

8. Procédé selon l'une quelconque des revendications 1 à 7, dans lequel le procédé comprend en outre :
l'envoi (708), à un nœud de réseau, d'une indication selon laquelle l'UE est configuré pour le premier type DRB selon à la fois la première configuration MDT et la seconde configuration MDT.

9. Procédé selon l'une quelconque des revendications 1 à 8, dans lequel le procédé comprend en outre :
la réception (710) d'une troisième configuration MDT relative à des mesures pour un troisième DRB d'un second type DRB ; et
le rapport (712) selon la troisième configuration MDT.

10. Procédé selon la revendication 9, dans lequel le rapport (712) selon la troisième configuration MDT comprend :
la réalisation de mesures pour le troisième DRB selon la troisième configuration MDT ; et
le rapport de résultats des mesures réalisées pour le troisième DRB.

11. Equipement utilisateur, UE, **caractérisé en ce qu'**il est configuré pour :
recevoir (702), à partir d'un premier nœud de réseau (QQ110A), une première configuration de minimisation de tests de couverture, MDT, relative à des mesures pour un premier support radio de données, DRB, d'un premier type DRB, le premier type DRB comprenant l'un des éléments suivants : un type de support de groupe de cellule maître, MCG, un type de support de groupe de cellule secondaire, SCG, et un type de support divisé ;
recevoir (704), à partir d'un second nœud de réseau (QQ110B), une seconde configuration MDT relative à des mesures pour un second DRB du premier type DRB ; et
rapporter (706) une pluralité de rapports de mesure, l'UE étant configuré pour rapporter des mesures selon la première configuration MDT au premier nœud de réseau, tandis que l'UE est configuré pour rapporter des mesures selon la seconde configuration MDT au second nœud de réseau, et
dans lequel l'UE est configuré pour rapporter la pluralité de rapports de mesure après avoir reçu les première et seconde configurations MDT.

12. UE selon la revendication 11, dans lequel l'UE est en outre configuré pour réaliser le procédé selon l'une quelconque des revendications 2 à 10.
